# EUROPEAN PATENT APPLICATION

(11) **EP 4 632 611 A1**
(43) Date of publication of application: **15.10.2025**
(21) Application number: 25168429.6
(22) Date of filing: 04.04.2025
(51) Int. Cl.: G06F 21/60, H04L 9/40, H04N 7/18

(54) **PERMISSIONS MANAGEMENT FOR A SECURITY SYSTEM**

(30) Priority: 09.04.2024 US 202463631791 P
(71) Applicant: Genetec Inc., St-Laurent, Québec H4S 2A4 (CA)
(72) Inventor: MALIAN, Paul, St-Laurent, Québec H4S 2A4 (CA); GUIMIER, Nicolas, St-Laurent, Québec H4S 2A4 (CA); NADEAU, Sebastien, St-Laurent, Québec H4S 2A4 (CA); HENRICHON, Hugo, St-Laurent, Québec H4S 2A4 (CA)
(74) Representative: Kramer Barske Schmidtchen Patentanwälte PartG mbB

(57) **Abstract**

A system and method for managing permissions in a security system. A computing system is adapted to associate a first user account and a second user account with the security system, grant permissions associated with the security system for the first user account, and receive a request for activating the security system from the first user account. The computing system further adapted to prompt the second user account to assume control of the security system following receiving the request, modify permissions associated with the security system for the second user account in response to the second user account assuming control of the security system, and restrict permissions associated with the security system for the first user account following the second user account assuming control of the security system.

## Description

### RELATED APPLICATIONS

This application claims the benefit of co-pending U.S. Provisional Patent Application No. 63/631,791.

### FIELD

The present teachings relate generally to security systems and, more particularly, to systems and methods for managing permissions for accessing a security system.

### BACKGROUND

Security systems, which can include a variety of security devices such as surveillance cameras, access controls, motion sensors, and/or alarms, are commonly used to monitor and/or restrict access to particular areas. Recently, security systems have become increasingly integrated with cloud-based services that can store and/or provide access to data generated by the security devices in a security system. For example, data generated by a security device (e.g., video content generated by a surveillance camera) can be uploaded to a cloud-based service where the data is stored for later viewing by end users of the security system.

Oftentimes, security devices included in a security system are manufactured and/or sold by providers that are different than the provider of the cloud-based service for the security system. Thus, in one approach to simplify the process of purchasing, installing, and subsequently activating a security system, end users contract a third-party integrator, consultant, distributor, or other service provider to design, install, and connect the security system to the cloud-based service.

However, at least one drawback to using a third-party integrator to install and connect a security system to a cloud-based service is that the third-party integrators frequently accept the legal terms (or other legal agreement) for the cloud-based service with third-party integrator accounts on behalf of the end users of the security system. In this regard, the actual end users of the security system and cloud-based service do not accept the legal terms thereby presenting legal challenges for the operator of the cloud-based service.

At least another drawback to using a third-party integrator to install and connect a security system to a cloud-based service is that, oftentimes, the user account that is owned and operated by the third-party integrator (e.g., third-party integrator account) is assigned administrative permissions even after the security system has been activated and subsequently used by the end user. Administrative permissions are permissions that allow a user account to make changes to the security system, such as adding new security devices to and/or removing existing security devices from the security system, accessing data generated by the security devices without restrictions, adding, removing, or modifying user accounts, and/or remotely controlling one or more of the security devices in the security system. Accordingly, with administrative permissions, a third-party integrator account can continue to control aspects of the security system and/or access sensitive data generated by security devices after activation of the security system. Moreover, relying on integrators to provide administrative permissions to end users (e.g., owners of the security system) may be unreliable, resulting in those end users interacting with the system using user accounts without ever receiving the administrative permissions to which they are entitled. As a result, the end users may have to rely on the third-party integrator to make desired changes to their own security system.

Therefore, it would be beneficial to have an alternative system and method for managing permissions for a security system.

### SUMMARY

The needs set forth herein as well as further and other needs and advantages are addressed by the present embodiments, which illustrate solutions and advantages described below.

The present teachings relate to managing permissions for a security system. In particular, the present teachings relate to automatically restricting, or limiting, the security system permissions assigned to third-party service provider accounts when the security system is activated. Moreover, with the present teachings, the security system permissions assigned to an end user account can be automatically modified (e.g., increased) in response to the end user assuming control of the security system.

At least one technical advantage of the present teachings relative to existing solutions is that, with the present teachings, service providers are prevented from accepting legal terms for operating a security system on behalf of an end user after activation of security system. At least another technical advantage of the present teachings relative to existing solutions is that, with the present teachings, permissions assigned to service provider accounts are restricted after activation of the security system, thereby preventing service providers from controlling aspects of the security system and/or accessing sensitive data generated by the security system.

One embodiment of a system according to the present teachings includes, but is not limited to, at least one security device adapted to generate security data and a computing system adapted to associate a first user account and a second user account with the security system, wherein the security system is associated with a first entity and wherein the first user account is associated with a third-party entity. The computing system is adapted to grant permissions associated with the security system for the first user account. The computing system is adapted to receive a request for activating the security system from the first user account. The computing system is adapted to prompt the second user to assume control of the security system in response to receiving the request. The computing system adapted is to modify permissions associated with the security system for the second user account in response to the second user account assuming control of the security system. The computing system adapted to restrict permissions associated with the security system for the first user account following the second user account assuming control of the security system.

In one embodiment, the second user account is associated with an owner of the security system.

In one embodiment, to prompt the second user to assume control of the security system, the computing system is adapted to prompt the user to accept legal terms for using the security system. Further, the computing system is adapted to modify permissions associated with the security system for the second user account in response to the second user account accepting the legal terms.

In one embodiment, to prompt the second user account to accept the legal terms for using the security system, the computing system is adapted to transmit a message including the legal terms to the second user account.

In one embodiment, the permissions associated with the security system for the first user account comprise configuration permissions. To restrict the permissions associated with the security system for the first user account, the computing system is adapted to restrict the configuration permissions following the second user account assuming control of the security system.

In one embodiment, the permissions associated with the security system for the first user account comprise telemetry view permissions, and to restrict the permissions associated with the security system for the first user account, the computing system is adapted to maintain the telemetry permissions.

In one embodiment, to restrict permissions associated with the security system for the first user account comprises restricting permissions associated with the security system for the first user account in response to the second user account assuming control of the security system. Further, to restrict permissions associated with the security system for the first user account occurs after a predetermined delay following the second user account assuming control of the security system.

In one embodiment, the computing system is adapted to generate a third user account for the security system, the third user account for the security system is associated with a client of the first entity. The computing system is adapted to assign permissions associated with the security system for the third user account based on a first input received from the second user account.

In one embodiment, the computing system is adapted to delete the third user account based on a second input received from the second user account.

In one embodiment, the computing system is a cloud-based computing system that includes a plurality of processors coupled to each other via a network and a plurality of displays coupled to the plurality of processors.

In one embodiment, the computing system is coupled to the at least on security device via a network.

In one embodiment, the computing system includes a storage device. The computing system is adapted to receive the security data generated by the at least one security device and store the security data in the storage device.

In one embodiment, the computing system is adapted to permit the second user account to access the security data stored in the storage device based on modified permissions associated with the security system for the second user account.

In one embodiment, the computing system is adapted to prevent the first user account from accessing the security data stored in the storage device based on restricted permissions associated with the security system for the first user account.

In one embodiment, the computing system is adapted to generate a third user account for the security system. The computing system is adapted to permit the third user account to access the security data stored in the storage device for a limited amount of time based on restricted permissions associated with the security system for the third user account.

In one embodiment, the computing system is adapted to prevent the first user account from accessing the at least one security device when a particular amount of time passes after activation of the security device.

In one embodiment, the computing system is adapted to prompt the first user account to accept legal terms for using the security system.

In one embodiment, the computing system is adapted to receive a request for creating the second user account from the first user account and create the second user account in response to receiving the request for creating the second user account.

In one embodiment, the computing system is adapted to receive a subsequent request for activating an expansion to the security system from a subsequent user account associated with a subsequent third-party entity, modify permissions associated with the subsequent user account in response to receiving the subsequent request, prompt the second user to assume control of the expansion in response to receiving the request, and modify subsequent permissions associated with the expansion for the second user account in response to the second user account assuming control of the expansion.

In one embodiment, responsive to the second user account assuming control of the expansion, the computing system is adapted to create a tertiary user account or modify permissions associated with the tertiary user account, the tertiary user account associated with a tertiary third-party entity.

An embodiment of a data management system according to the present teaching includes, but is not limited to, a computing system adapted to associate a first user account for the data management system, wherein the data management system is associated with a first entity and the first user account is associated with a third-party entity. The computing system adapted to generate a second user account for the data management system, wherein the second user account is associated with the first entity. The computing system adapted to receive a request to activate the security system from the first user account. The computing system adapted to prompt the second user account to assume control of the data management system in response to receiving the request to activate the data management system. The computing system adapted to grant permissions associated with the data management system for the second user account in response to the second user account assuming control of the data management system. The computing system adapted to restrict permissions associated with the data management system for the first user account following the second user account assuming control of the data management system.

In one embodiment, the data management system comprises a data storage device. To generate the second user account, the computing system is adapted to assign the second user account owner permissions for accessing data stored in the data storage device and lock the owner permissions for accessing data stored in the data storage device.

In one embodiment, to grant permissions associated with the data management system to the second user account, the computing system is adapted to unlock the owner permissions for accessing data stored in the data storage device.

In one embodiment, to prompt the second user account to assume control of the data management system, the computing system is adapted to transmit a message including legal terms for using the data management system to the second user account.

In one embodiment, to restrict permissions associated with the data management system for the first user account, the computing system is adapted to delete the first user account.

Another embodiment of a security system according to the present teaching includes, but is not limited to, at least one surveillance camera adapted to generate video data, at least one access control adapted to control access to a door and generate security data associated with a number of times the door was accessed, and a computing system adapted to generate a first user account and a second user account for the security system. The computing system adapted to receive a request for activating the security system from the first user account. The computing system adapted to restrict permissions associated with the security system for the first user account following receiving the request, wherein to restrict the permissions associated with the security system for the first user account includes denying the first user account access to the video content and the security data. The computing system adapted to prompt the second user to assume control of the security system in response to receiving the request. The computing system adapted to modify permissions associated with the security system for the second user account in response to the second user assuming control of the security system.

In one embodiment, the security system is associated with a first entity, the first user account is associated with a third-party entity, and the second user account is associated with the first entity.

In one embodiment, the computing system is adapted to delete the first user account following the second user account assuming control of the security system.

In one embodiment, the computing system is adapted to receive a request for creating the second user account from the first user account and create the second user account in response to receiving the request for creating the second user account.

Other embodiments of the system and method are described in detail below and are also part of the present teachings.

For a better understanding of the present embodiments, together with other and further aspects thereof, reference is made to the accompanying drawings and detailed description, and its scope will be pointed out in the appended claims.

### BRIEF DESCRIPTION OF THE DRAWINGS

FIG. 1 is an illustration of one embodiment of a security system, according to the present teachings.
FIG. 2 is a block diagram of a security device that may be implemented in conjunction with a security system, according to the present teachings.
FIG. 3 is a block diagram of a server that may be implemented in conjunction with a security system, according to the present teachings.
FIG. 4 is a block diagram of an integrator computing device that may be implemented in conjunction with a security system, according to the present teachings.
FIGS. 5A-5F illustrate an example process for integrating a security system with a cloud-based service, according to the present teachings.
**FIG.** 6 is a block diagram of an end user computing device that may be implemented in conjunction with a security system, according to the present teachings.
FIG. 7A illustrates an example login window for a security system portal application, according to the present teachings.
**FIG.** 7B illustrates an example window that prompts a user to accept legal terms for operating a security system in conjunction with a security system portal, according to the present teachings.
FIG. 8A illustrates an example window that is presented to a user by a computing system for managing user accounts associated with a security system, according to the present teachings.
FIG. 8B illustrates an example window that is be presented to a user by a computing system for modifying permissions assigned to a user account associated with a security system, according to the present teachings.
FIG. 9 illustrates an example flow diagram of a process for managing permissions in a security system, according to the present teachings.
FIG. 10 is a flow diagram of method steps for managing permissions in a security system, according to the present teachings.

### DETAILED DESCRIPTION

The present teachings are described more fully hereinafter with reference to the accompanying drawings, in which the present embodiments are shown. The following description is presented for illustrative purposes only and the present teachings should not be limited to these embodiments. Any computer configuration and architecture satisfying the speed and interface requirements herein described may be suitable for implementing the system and method of the present embodiments.

In compliance with the statute, the present teachings have been described in language more or less specific as to structural and methodical features. It is to be understood, however, that the present teachings are not limited to the specific features shown and described, since the systems and methods herein disclosed comprise preferred forms of putting the present teachings into effect.

For purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail.

A "computing system" may provide functionality for the present teachings. The computing system may include software executing on computer readable media that may be logically (but not necessarily physically) identified for particular functionality (e.g., functional modules). The computing system may include any number of computers/processors, which may communicate with each other over a network. The computing system may be in electronic communication with a datastore (e.g., database) that stores control and data information. Forms of computer readable media include, but are not limited to, disks, hard drives, random access memory, programmable read only memory, or any other medium from which a computer can read.

Generally, all terms used in the claims are to be interpreted according to their ordinary meaning in the technical field, unless explicitly defined otherwise herein. All references to a/an/the element, apparatus, component, means, step, etc. are to be interpreted openly as referring to at least one instance of the element, apparatus, component, step, etc., unless explicitly stated otherwise. The steps of any method disclosed herein do not have to be performed in the exact order disclosed, unless explicitly stated. The use of "first", "second," etc. for different features/components of the present disclosure are only intended to distinguish the features/components from other similar features/components and not to impart any order or hierarchy to the features/components.

To aid the Patent Office and any readers of a patent issued on this application in interpreting the claims appended hereto, it is noted that none of the appended claims or claim elements are intended to invoke 35 U.S.C. 112(f) unless the words "means for" or "step for" are explicitly used in the particular claim.

Recitations of numerical ranges by endpoints include all numbers within that range (e.g., 1 to 5 includes 1, 1.5, 2, 2.75, 3, 3.80, 4, 5, etc.). Where a range of values is "greater than", "less than", etc., of a particular value, that value is included within the range.

Any direction referred to herein, such as "top," "bottom," "left," "right," "upper," "lower," "above," below," and other directions and orientations are described herein for clarity in reference to the figures and are not to be limiting of an actual device or system or use of the device or system. Many of the devices, articles, or systems described herein may be used in a number of directions and orientations.

Any citation to a reference in this disclosure or during the prosecution thereof is made out of an abundance of caution. No citation (whether in an Information Disclosure Statement or otherwise) should be construed as an admission that the cited reference qualifies as prior art or comes from an area that is analogous or directly applicable to the present teachings.

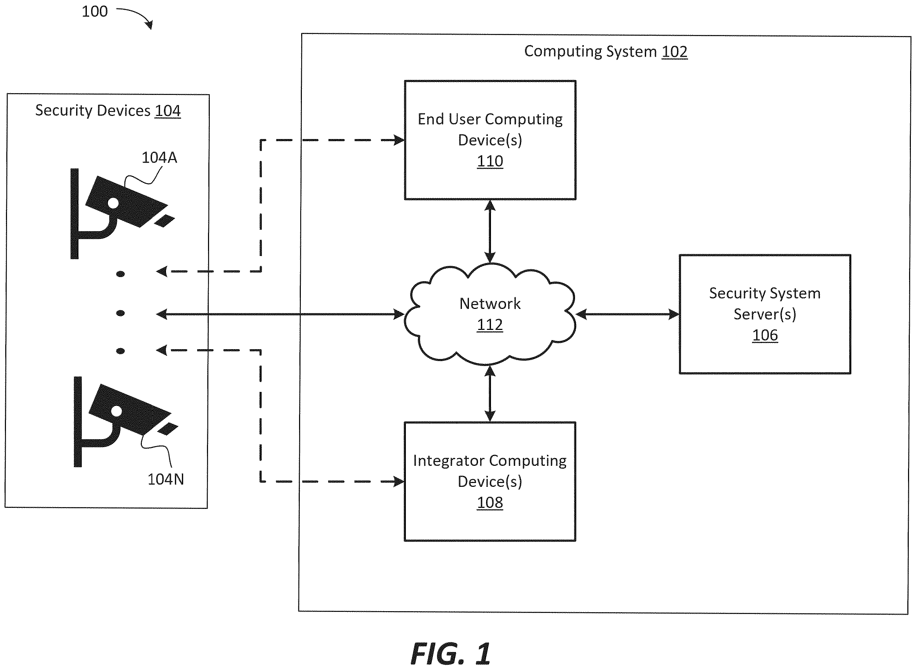

Referring now to FIG. 1, shown is one embodiment of a security system 100 according to the present teachings. As shown, the security system 100 includes a computing system 102 that is in electronic communication with a plurality of security devices 104 that generate security data. The computing system 102 may include any number of computers/processors, which may communicate with each other over a network and rely on distributed computing resources. In some examples, the computing system 102 may be in the form of one or more servers.

In the illustrated example of FIG. 1, the computing system 102 includes one or more security system servers 106, one or more integrator computing devices 108, and one or more end user computing devices 110, each of which are connected via a communications network 112. In the following description, the one or more security system servers 106 may be collectively referred to as a security system server 106, the one or more integrator computing devices 108 may be collectively referred to as an integrator computing device 108, and the one or more end user computing devices 110 may be collectively referred to as an end user computing device 110.

In the illustrated example of FIG. 1, the security devices 104 are shown as surveillance cameras that generate video content. However, the security system 100 can include various types of security devices other than surveillance cameras. For example, the security devices 104 can be implemented as one or more of surveillance cameras, motion sensors, alarms, access controls (e.g., door locks), and/or any other suitable type of security device. In the following description, the plurality of security devices 104 be collectively referred to as a security device 104.

One or more of the security devices 104 may be connected to the computing system 102 via the communications network 112. For example, a security device 104 can be connected to one or more of the security system server 106, the integrator computing device 108, and/or the end user computing device 110 via the communications network 112. In some examples, the integrator computing device 108 can be connected directly to one or more security devices 104, for example via a wired connection, without using the communications network 112. Similarly, in some examples, the end user computing device 110 can be connected directly to one or more security devices 104, for example via a wired connection, without using the communications network 112.

The communications network 112 can be, for example, a combination of one or more of a wide area network (WAN) (e.g., the Internet, a TCP/IP based network, a cellular network, such as, for example, a Global System for Mobile Communications [GSM] network, a General Packet Radio Services [GPRS] network, a Code Division Multiple Access [CDMA] network, an Evolution-Data Optimized [EV-DO] network, an Enhanced Data Rates for GSM Evolution [EDGE] network, a 3 GSM network, a 4GSM network, a Digital Enhanced Cordless Telecommunications [DECT] network, a Digital AMPS [IS-136/TDMA] network, or an Integrated Digital Enhanced Network [iDEN] network, etc.), a local area network (LAN), a neighborhood area network (NAN), a home area network (HAN), and/or a personal area network (PAN) employing any of a variety of communications protocols, such as Wi-Fi, Bluetooth, ZigBee, etc.

During operation of the security system 100, the security devices 104 generate security data and transmit the security data to the security system server 106. For example, a security device 104 that is implemented as a surveillance camera may generate and transmit video content to the security system server 106. As another example, a security device 104 that is implemented as an access control may generate and transmit data associated with door openings and closings to the security system server 106. In some examples, a security device 104 can transmit security data directly to the security system server 106 via the communications network 112. In other examples, a security device 104 can transmit security data to the security system server 106 indirectly through one or more intermediary devices, such as an integrator computing device 108 and/or an end user computing device 110.

The security system server 106 can store and manage access to security data received from the security devices 104. Furthermore, the security system server 106 can manage access and control of operation of the security devices 104 within the security system 100. For example, the security system server 106 is adapted to provide a cloud-based service, or portal, through which third-party entities (e.g., integrators, consultants, distributors, or other service providers) and/or end users (e.g., owners) of the security system 100 can access the security system 100. As used herein, the phrase "accessing the security system 100" can include one or more of viewing security data that was generated by the security devices 104 and stored in the security system server 106, activating the security system 100, remotely controlling operation of a security device 104, adding a new security device 104 to the security system 100, removing an existing security device 104 from the security system 100, viewing which and/or how many security devices 104 are active in the security system 100, creating new user accounts and/or deleting existing user accounts associated with the security system 100, assigning permissions to user accounts associated with the security system 100, modifying permissions assigned to user accounts associated with the security system 100, provisioning the security system server 106, and/or various other management and control features associated with the security system 100.

The security system server 106 is further adapted to generate and manage user accounts for accessing the security system 100 through the portal. For example, the security system server 106 can generate an integrator account that can be used by an integrator and/or some other third-party entity to design, install, configure, and/or activate the security system 100 via the portal. As another example, the security system server 106 can generate one or more end user accounts that can be used by end users (e.g., owners) of the security system 100 to access the security system 100 via the portal. Moreover, the security system server 106 can be adapted to associate pre-existing user accounts, such as a pre-existing integrator account, with new security systems that are being designed, purchased, configured, and/or installed.

As will be described in more detail herein, the security system server 106 can manage and assign permissions associated with the security system 100 for the various user accounts (e.g., the integrator account, the end user accounts, etc.) that can be used to access the security system 100. Permissions associated with the security system 100 for a particular user account, which can hereinafter be referred to as "permissions," refer to the various actions associated with the security system 100 that a user account is enabled to perform or disabled from performing. For example, permissions for a particular user account define whether that particular user account is enabled to perform or disabled from performing one or more of viewing security data that was generated by the security devices 104 and stored in the security system server 106, remotely controlling operation of a security device 104, adding a new security device 104 to the security system 100, removing an existing security device 104 from the security system 100, viewing which and/or how many security devices 104 are active in the security system 100, and/or various other management and control features associated with the security system 100 described herein.

When an integrator account is first generated and/or associated with a security system 100, the security system server 106 may grant, or assign, administrative permissions to the integrator account. Administrative permissions, for example, provide a user account with unrestricted access to the security system 100, for instance to enable the integrator to properly configure the security system 100. In that regard, with the administrative permissions assigned to the integrator account, an integrator (e.g., third-party entity that is not the end user or owner of the security system 100) can design the security system 100, request pricing associated with the security system 100, pre-provision resources in the security system server 106 for the security system 100, add and configure new security devices 104 to the security system 100, remove security devices 104 from the security system 100, connect the security system 100 to the portal, activate the security system 100, create new user accounts for the end user of the security system 100 (e.g., primary end user account, secondary end user account, etc.), view performance metrics associated with the security devices 104 (e.g., see which security devices 104 are properly functioning and/or malfunctioning), view security data generated by the security devices 104, manage permissions for user accounts, and/or reset passwords for the user accounts. For example, an integrator can use the integrator computing device 108 to log in to the integrator account and access, via the security system server 106, the portal to perform one or more of above-described actions that are enabled with administrative permissions.

As will be described in more detail herein, following receipt of a request to activate the security system 100 from the integrator account, the security system server 106 can remove the administrative permissions from the integrator account and/or assign limited permissions to the integrator account. In that regard, the security system server 106 restricts, or limits, the permissions of the integrator account after receiving a request to activate the security system 100. In some examples, limiting the permissions of the integrator account can include granting the integrator account access to the security system 100 for a limited amount of time (e.g., 45 days after activation of the security system 100) after receipt of the of the activation request from the integrator account. In such examples, the integrator account may be permitted to perform actions associated with commissioning the security system 100, such as configuring security devices 104 and/or enrolling security devices 104 in the cloud services, during the limited amount of time. Stated another way, the integrator account may maintain its existing permissions for a limited amount of time after receipt of the request to activate the security system 100. Then, after expiration of the limited amount of time, the permissions assigned to the integrator account may be further restricted and/or the integrator account is deleted.

In some examples, limiting the permissions of the integrator account can include limiting which actions can be performed by the integrator account after receiving a request to activate the security system 100. For example, limited permissions may restrict the integrator account to actions such as viewing performance metrics associated with the security devices 104 (e.g., see which security devices 104 are properly functioning and/or malfunctioning). As another example, limited permissions may prevent the integrator account from viewing security data generated by one or more security devices 104.

When a primary end user account is first generated, for example by an integrator account with administrative permissions and/or by the security system server 106, the security system server 106 may assign relatively limited permissions to the primary end user account. For example, prior to activation of the security system 100, the security system server 106 may assign permissions to the primary end user account that prevent the primary end user account from adding security devices 104 to the security system 100, removing security devices 104 from the security system 100, and/or remotely controlling security devices 104 in the security system 100. However, as will be described in more detail herein, following receiving a request to activate the security system 100 from the integrator account, the security system server 106 can prompt the primary end user account to accept legal terms (e.g., terms and conditions (T&Cs), terms of service (ToS), etc.) for using the security system 100 in conjunction with the portal. When the primary end user account accepts the legal terms, for example via a user-interface of the end user computing device 110, the security system server 106 can assign the administrative permissions to the primary end user account and activate, or commission, the security system 100.

In some examples the integrator account requests activation of the security system 100 when the security system 100 is ready to operate (e.g., after the security devices 104 have been purchased, installed, and/or configured). In other examples, an integrator account may request activation of the security system 100 before security devices 104 are purchased, installed, and/or configured (e.g., before the security system 100 is ready to be operated). In such examples, a staging period may occur between the time at which the integrator account requests activation of the security system 100 and the subsequent time at which the security system 106 prompts the primary end user account to accept legal terms (e.g., terms and conditions (T&Cs), terms of service (ToS), etc.) for using the security system 100.

During the staging period, one or more integrators may purchase, install, and/or configure the security devices 104 included in the security system 100. For example, an integrator may use the integrator account to purchase, install, and/or configure the security devices 104 during the staging period.

In some examples, the security system 106 may refrain from limiting the permissions of the integrator account until after completion of the staging period. In such examples, rather than limiting the permissions of the integrator account upon receiving the request to activate the security system 100 from the integrator account, the security system 106 allows the integrator account to operate with administrative permissions during the staging period. In other examples, the security system 106 may grant the integrator account administrative permissions for a limited amount of time (e.g., 45 days after activation of the security system 100) after receipt of the of the activation request from the integrator account.

Following completion of the staging period, the security system server 106 may then prompt the primary end user account to accept legal terms for using the security system 100 in conjunction with the portal and/or may limit the permissions of the integrator account as described herein. In some examples, following completion of the staging period, the integrator account requests the security system server 106 to release the security system 100 to the primary end user account. In such examples, in response to receiving a request to release the security system 100 to the primary end user account from the integrator account, the security system server 106 may prompt the primary end user account to accept legal terms for using the security system 100 in conjunction with the portal and/or may limit the permissions of the integrator account as described herein.

In some examples, when an integrator account is first generated and/or associated with a security system 100, the security system server 106 may also prompt the integrator account to accept legal terms for using and/or configuring the security system 100. In such examples, when the integrator account accepts the legal terms, the security system server 106 may then grant, or assign, administrative permissions to the integrator account.

In some examples, new modules and/or add-ons (e.g., new security devices 104) can be added to the security system 100 after the primary end user account has already assumed control of the security system 100. For example, the

Although FIG. 1 and the disclosed techniques are described primarily with respect to a security system comprising at least one security device adapted to generate security data, in some examples, the disclosed techniques can be applied more generally to data management systems that do not comprise one or more security devices and/or security data. In that regard, description of security data generated by one or more security devices herein can be applied more generally to other types of data, such as general telemetry data, operational data, management data, administrative data, and/or other types of data associated with an organization, that can be stored in and/or managed by a data management system. Moreover, description herein of the security system server(s) 106, the integrator computing device(s) 108, and/or the end user computing device(s) 110 can more generally be applied to operation of servers and/or other computing devices included within a data management system.

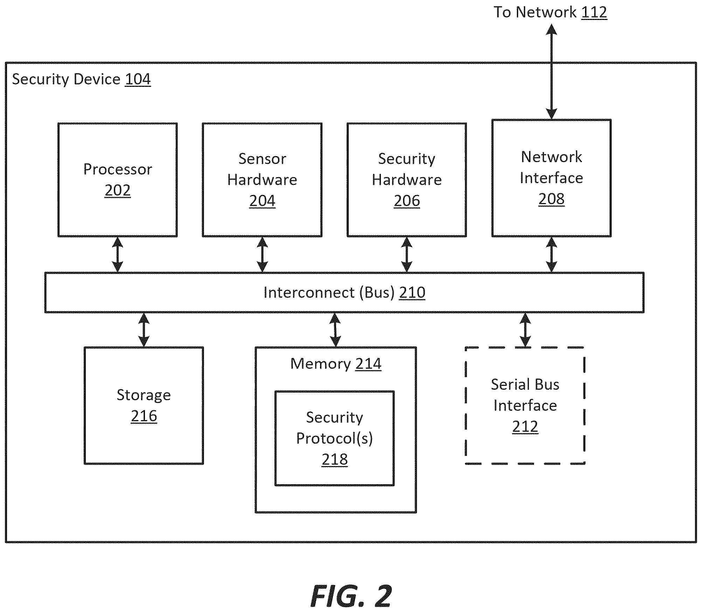

FIG. 2 is a block diagram of a security device 104 that may be implemented in conjunction with the security system 100, according to present teachings. As shown, the security device 104 may include, without limitation, a processor 202, sensor hardware 204, security hardware 206, a network interface 208, an interconnect 210, a serial bus interface 212, memory 214, and storage 216. The interconnect, or bus, 210 can include one or more wires, cables, traces, contacts, analog components, digital components, wireless connection components, or other suitable means for interconnecting hardware components of the security device 104.

The sensor hardware 204 can include, without limitation, one or more of an image sensor, an audio sensor, a motion sensor, an RFID sensor, a barcode reader, and/or some other suitable sensing means. The security hardware 206 can include one or more actuators, motors, linkages, and/or other mechanisms associated with operation of the security device 104. For example, if the security device 104 is implemented as a surveillance camera, the security hardware can include an actuator used for rotating the camera and/or mechanisms used for adjusting the field of view of the camera. As another example, if the security device 104 is implemented as an access control, the security hardware 206 can include one or more actuators and mechanisms used for locking and unlocking a door.

The processor 202 is adapted to control the security device 104 (e.g., the sensor hardware 204 and/or the security hardware 206) to operate and generate security data in accordance with one or more security protocols 218 included in the memory 214 and/or the storage 216. For an example in which the security device 104 is a surveillance camera, the processor 202 controls the security device 104 to generate security data, such as video content, in accordance with the security protocols 218. For an example in which the security device 104 is an access control, the processor 202 controls the security device 104 to lock and unlock doors in accordance with the security protocols 218. In this example, the processor 202 further controls the security device 104 to generate security data, such as data indicative of times at which the door was locked and/or unlocked or data that identifies users who locked and/or unlocked the door, in accordance with the security protocols 218.

The processor 202 is further adapted to transmit security data to the security system server 106. For example, the processor 202 transmits security data directly to the security system server 106 via the communications network 112. As another example, the processor 202 transmits security data to the security system server 106 indirectly via one or more intermediary devices, such as the integrator computing device 108and/or the end user computing device 110.

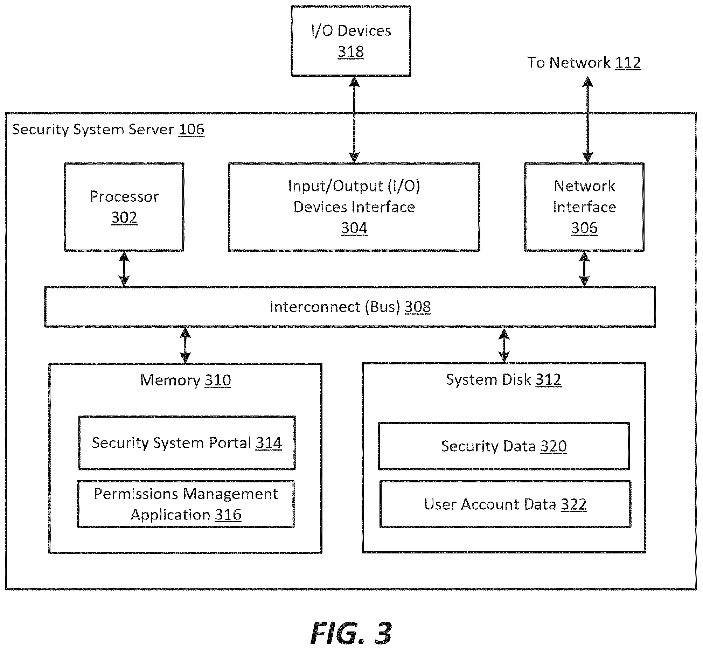

FIG. 3 is a block diagram of a security system server 106 that may be implemented in conjunction with the computing system 102 of FIG. 1, according to present teachings. As shown in FIG. 3, the security system server 106 includes, without limitation, a processor 302, an input/output (I/O) devices interface 304, a network interface 306, an interconnect 308, a system memory 310, and a system disk 312. The interconnect, or bus, 308 can include one or more wires, cables, traces, contacts, analog components, digital components, wireless connection components, and/or other suitable means for interconnecting hardware components of the security system server 106.

The processor 302 is adapted to retrieve and execute programming instructions, such as the security system portal 314 and/or the permissions management application 316, stored in the system memory 310. Similarly, the processor 302 is adapted to store application data in (e.g., software libraries) and retrieve application data from the system memory 310. The interconnect 308 is adapted to facilitate transmission of data, such as programming instructions and application data, between the processor 302, the I/O devices interface 304, the network interface 306, the system memory 310, and the system disk 312. The I/O devices interface 304 is adapted to receive input data from I/O devices 318 and transmit the input data to the processor 302 via the interconnect 308. For example, I/O devices 318 may include one or more buttons, a keyboard, a mouse, and/or other input devices. The I/O devices interface 304 is further adapted to receive output data from the processor 302 via the interconnect 308 and transmit the output data to the I/O devices 318.

The system disk 312 may include one or more hard disk drives, solid state storage devices, or similar storage devices. The system disk 312 is adapted to store non-volatile data such as files (e.g., audio files, video files, subtitles, application files, software libraries, etc.). For example, the system disk 312 is adapted to store security data 320 generated by security devices 104 in the security system 100. The system disk 312 is further adapted to store user account data 322 associated with the user accounts for the security system 100. The user account data 322 includes, for example, a list of user accounts and their respective permissions for accessing the security system 100.

The system memory 310 includes software instructions for running the security system portal 314 described herein. In operation, the security system portal 314 can receive security data 320 generated by one or more security devices 104 in the security system 100 and store the security data 320 in system disk 312. The security system portal 314 can also communicate with and remotely control the security devices 104 included in the security system 100.

In some examples, the security system portal 314 is implemented as a cloud-based service that provides an interface through which user accounts can access the security data 320 stored in the system disk 312 and/or control various aspects of the security system 100. For example, a user can log in to a user account for security system 100 on a computing device that is connected to the security system server 106 (e.g., the integrator computing device 108 and/or the end user computing device 110) via the communications network 112 and access, via the security system portal 314, the security system 100 in accordance with the permissions assigned to that user account. As described herein, accessing the security system 100 can include one or more of viewing security data that was generated by the security devices 104 and stored in the security system server 106, activating the security system 100, remotely controlling operation of a security device 104, adding a new security device 104 to the security system 100, removing an existing security device 104 from the security system 100, viewing which and/or how many security devices 104 are active in the security system 100, creating new user accounts associated with the security system 100, assigning permissions to user accounts associated with the security system 100, modifying permissions assigned to user accounts associated with the security system 100, provisioning the security system server 106, and/or various other management and control features associated with the security system 100.

In one example, an integrator can log in to the integrator account on the integrator computing device 108 and access the security system 100 via the security system portal 314. The permissions assigned to the integrator account define which actions the integrator can perform while accessing the security system 100 via the security system portal 314. Similarly, an end user can log in to an end user account on the end user computing device 110 to access the security system 100 via the security system portal 314. The permissions assigned to the end user account define which actions the end user can perform while accessing the security system 100 via the security system portal 314.

As shown in FIG. 3, the memory 310 further includes a permissions management application 316 that manages the permissions assigned to user accounts associated with the security system 100. Although the permissions management application 316 is shown in FIG. 3 as being separate from the security system portal 314, in some examples, the functionality of the security system portal 314 and the functionality of the permissions management application 316 can be combined into a single application and/or program.

In operation, the permissions management application 316 manages the permissions assigned to respective user accounts associated with the security system 100. For example, the permissions management application 316 can assign, or grant, administrative permissions to the integrator account after generation of the integrator account and/or prior to activation of the security system 100 (e.g., while the security system 100 is still in the design and/or installation phase). Moreover, the permissions management application 316 restricts the administrative permissions of the integrator account following receipt of a request to activate the security system 100 from the integrator account and/or following an end user account assuming control of the security system 100. In some examples, when the permissions management application 316 restricts administrative permissions of the integrator account, the permissions management application 316 actually assigns limited permissions to the integrator account. In such examples, the integrator account only has permission to perform actions that are permitted by the limited permissions with which the integrator account is assigned. In some examples, the permissions management application 316 deletes an integrator account following an end user account assuming control of the security system 100.

As described herein, in some examples, assigning limited permissions to the integrator account includes setting an expiration date and/or time for the existing permissions assigned to the integrator account. In this regard, the integrator account can continue operating with the permissions (e.g., administrative permissions) that are currently assigned to the integrator account during the time period between the time at which the permissions management application 316 determines to limit the permissions of the integrator account and the time and/or date at which the existing permissions assigned to the integrator account expire. Accordingly, the integrator account can continue to perform actions, such as configuring new security devices 104 and/or enrolling security devices 104 with the security system portal 314, until the time and/or date at which the existing permissions assigned to the integrator account expire.

In some examples, with the limited permissions, the integrator account may only be able to perform operations such as viewing performance metrics associated with the security devices 104 (e.g., viewing whether particular security devices 104 are functioning properly or malfunctioning) or other telemetry data associated with the security system 100. Moreover, with the limited permissions, the integrator account may be prevented from viewing security data generated by the security devices 104, adding new security devices 104 to the security system 100, managing user accounts associated with the security system 100, remotely controlling security devices 104, and/or various other control features associated with the security system 100.

As another example, in response to and/or following receipt of the request to activate the security system 100 from the integrator account, the permissions management application 316 can prompt the primary end user account to assume control of the security system 100. In some examples, the permissions management application 316 prompts the primary end user account to assume control of the security system 100 by prompting the primary end user account to accept legal terms (e.g., T&Cs, ToS, etc.) for using the security system 100 in conjunction with the security system portal 314. In some examples, the permissions management application 316 can prompt the primary end user account to accept the legal terms by transmitting a message containing the legal terms to the primary end user account. The message containing the legal terms can be implemented as one or more of an e-mail, a text message, a pop-up notification that is displayed on the end user computing device 110, or some other message suitable for prompting the primary end user to accept the legal terms. In other examples, the permission management application 316 can prompt the primary end user account to accept the legal terms via one or more other mechanisms. For example, the permission management application 316 can cause the computing device of the primary end user account to display a window, button, link, icon, and/or other digital feature that when interacted with by the primary end user account, enable the primary end user account to accept the legal terms.

When the primary end user account assumes control of the security system 100 (e.g., accepts the legal terms), the permissions management application 316 then activates, or commissions, the security system 100 and assigns the administrative permissions to the primary end user account. Prior to acceptance of the legal terms, the permissions management application 316 may assign limited permissions to the primary end user account because the integrator account is still using the administrative permissions to design, install, and/or activate the security system 100. However, when the permissions management application 316 assigns the administrative permissions to the primary end user account, the primary end user account has unrestricted access to the security system 100. As an example, with administrative permissions, the primary end user account can generate one or more secondary end user accounts, modify the permissions assigned to the one or more secondary end user accounts, and/or modify permissions associated with the integrator account. When the primary end user account modifies permissions assigned to secondary end user accounts and/or the integrator account, the permission management application 316 can update the user account data 322 stored in the system disk 312 to reflect the changes to the respective account permissions. In some examples, the permissions management application 316 stores a record or other consultable indication of the acceptance of the legal terms, for instance in a blockchain or other storage mechanism (e.g., the system disk 312), which may then be used as part of an auditing process, or in any other suitable fashion.

In some examples, the permissions management application 316 can also prompt the integrator account to assume control of the security system 100. For example, when the integrator account is generated and/or first associated with the security system 100, the permissions management application 316 can prompt the integrator account to assume control of the security system 100. In some examples, the permissions management application 316 prompts the integrator account to assume control of the security system 100 by prompting the integrator account to accept legal terms (e.g., T&Cs, ToS, etc.) for using and/or configuring the security system 100 in conjunction with the security system portal 314. The permission management application 316 can use one or more of the techniques described herein for prompting a user to accept legal terms, such as by transmitting a message containing the legal terms to the primary end user account. When the integrator account assumes control of the security system 100 (e.g., accepts the legal terms), the permissions management application 316 then assigns the administrative permissions to the integrator account thereby enabling the integrator account to design, configure, commission, and/or activate the security system 100.

In some examples, when the permissions management application 316 first instantiates, or generates, new user accounts (e.g., primary end user account, integrator account, etc.), the permissions management application 316 grants permissions to one or more of the new user accounts. However, the permissions management application 316 also places a system-wide lock on the new user accounts such that, even though the new user account(s) may have been granted certain permissions, these new user account(s) are locked from accessing the security system 100 until the legal terms are accepted. For example, when the permissions management application 316 first generates a primary end user account and/or associates a primary end user account with a security system 100, the permissions management application 316 can grant administrative permissions to the primary end user account. However, the permissions management application 316 can place a system-wide lock on the primary end user account such that, even though the primary end user account has been granted administrative permissions, the primary end user account is restricted from accessing the security system 100 until the primary end user account accepts the legal terms for using the security system 100.

In some examples, the permissions management application 316 can also manage permissions assigned to user accounts during expansion of a security system 100. For example, after a security system 100 has activated and handed over to a primary end user account, a user account may request to expand the security system 100, where expanding the security system 100 can include adding new security devices 104, new user accounts, and/or other new features to the security system 100 (e.g., via a plugin, expansion module, or the like). When a user account (e.g., a primary end user account, an integrator account, an additional and/or new integrator account associated with a different third-party entity and/or integrator, or some other user account) requests to expand the security system 100, the permissions management application 316 can modify permissions associated with the requesting user account and/or one or more other user accounts following the request. For example, following the expansion request, the permission management application 316 can reassign administrative permissions to the integrator account and/or assign the integrator account with administrative permissions that can be used only for interacting with components in the security system 100 (e.g., new and/or existing security devices 104) effected by the expansion. As another example, following the expansion request, the permission management application 316 can reassign limited permissions to the primary end user account and/or assign the primary end user account with limited permissions for interacting with components in the security system 100 (e.g., new and/or existing security devices 104) effected by the expansion.

Moreover, following the completion of the expansion, the permissions management application 316 can prompt the primary end user account to reassume control of the security system 100. For example, the permission management application 316 may prompt the primary end user account to reassume control of the security system 100 after receiving an indication from the integrator account that expansion is complete and/or after receiving a request from the integrator account to handoff control of the expanded security system 100 to the primary end user account. The permissions management application 316 can prompt the primary end user account to reassume control of the expanded security system 100 using one or more of the techniques described herein. For example, the permission management application 316 can prompt the primary end user account to accept legal terms for operating the expanded security system 100.

When the primary end user account assuming control of the expansion to the security system 100, the permissions management application 316 can also modify the permissions associated with the expansion to the security system 100 for the primary end user account, the integrator account, and/or other user accounts. For example, the permissions management application 316 can reassign administrative permissions to the primary end user account and/or limit the permissions assigned to the integrator account. In some examples, responsive to the primary end user account assuming control of the expansion of the security system 100, the permissions management application 316 can create a tertiary user account or modify permissions associated with the tertiary user account, the tertiary user account associated with a tertiary third-party entity.

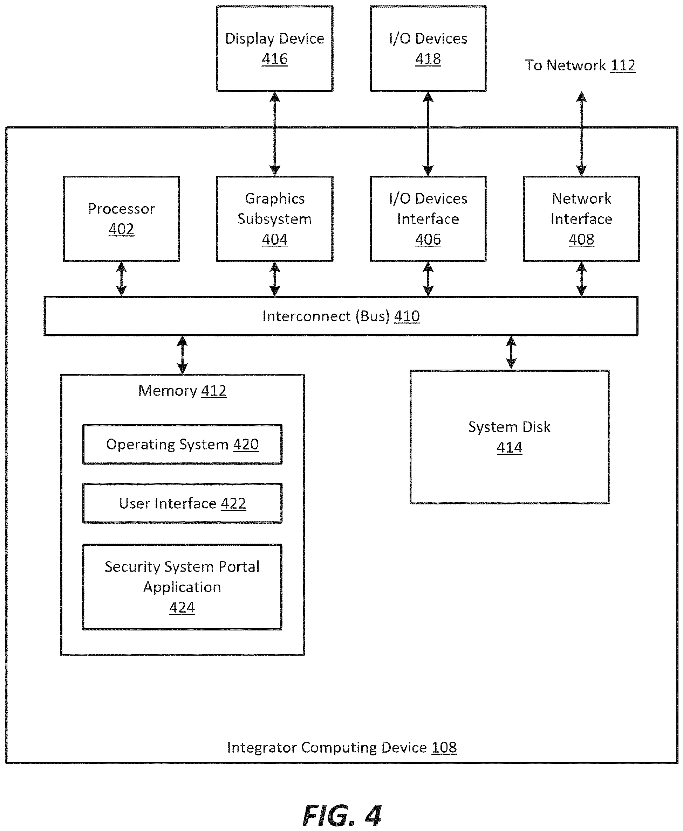

FIG. 4 is a block diagram of an integrator computing device 108 that may be implemented in conjunction with the computing system 102, according to present teachings. The integrator computing device 108 may be implemented as, for example, one or more of a desktop computer, a laptop, a tablet, a smart phone, a server, or some other similar computing device.

As shown, the integrator computing device 108 may include, without limitation, a processor 402, a graphics subsystem 404, an I/O devices interface 406, a network interface 408, an interconnect 410, a memory subsystem 412, and a system disk 414. The interconnect 410 is adapted to facilitate transmission of data, such as programming instructions and application data, between the processor 402, the graphics subsystem 404, the I/O devices interface 406, the network interface 408, the memory subsystem 412, and the system disk 414.

In some embodiments, the processor 402 (e.g., a CPU or similar processor) is adapted to retrieve and execute programming instructions stored in the memory subsystem 412. Similarly, the processor 402 is adapted to store and retrieve application data (e.g., software libraries) residing in the memory subsystem 412 and/or the system disk 414. The interconnect 410 is adapted to facilitate transmission of data, such as programming instructions and application data, between the processor 402, the graphics subsystem 404, the I/O devices interface 406, the network interface 408, the memory subsystem 412, and the system disk 414.

In some embodiments, the graphics subsystem 404 is adapted to generate frames of image and/or video data and transmit the frames of image and/or video data to display device 416. In some embodiments, the graphics subsystem 404 may be integrated into an integrated circuit, along with the processor 402. The display device 416 may comprise any technically feasible means for generating an image for display. For example, the display device 416 may be fabricated using liquid crystal display (LCD) technology, cathode-ray technology, and light-emitting diode (LED) display technology. The display device 416 may include, for example, one or more monitors.

**The** input/output (I/O) device interface 406 is adapted to receive input data from user I/O devices 418 and transmit the input data to the processor 402 via the interconnect 410. For example, user I/O devices 418 may comprise one or more buttons, a keyboard, and a mouse or other pointing device. The I/O device interface 406 also includes an audio output unit adapted to generate an electrical audio output signal. User I/O devices 418 may comprise one or more speakers adapted to generate an acoustic output in response to the electrical audio output signal. In alternative embodiments, the display device 416 may include the speaker. In some examples, one or more security devices 104 can be connected to the integrator computing device 108 via the I/O devices interface 406.

The network interface 408 is adapted to transmit and receive packets of data via the network 112. For example, the network interface 408 is used to receive security data from one or more security devices 104, transmit security data to the security system server 106, and/or access the security system 100 via the security system server 106. In some embodiments, the network interface 408 is adapted to communicate using the well-known Ethernet standard. The network interface 408 is coupled to the processor 402 via the interconnect 410.

The system disk 414, such as a hard disk drive or flash memory storage drive, is adapted to store non-volatile data. For example, the system disk 414 can store security data generated by the one or more security devices 104.

In some embodiments, the memory subsystem 412 includes programming instructions and application data that comprise an operating system 420, a user interface 422, and a security system portal application 424. The operating system 420 performs system management functions such as managing hardware devices including graphics subsystem 404, I/O device interface 406, the network interface 408, and system disk 414. The operating system 420 also provides process and memory management models for the user interface 422, and the security system portal application 424. The user interface 422, such as a window and object metaphor, provides a mechanism for user interaction with integrator computing device 108. Persons skilled in the art will recognize the various operating systems and user interfaces that are well-known in the art and suitable for incorporation into the integrator computing device 108.

The security system portal application 424, which can simply be referred to hereinafter as the portal application 424, provides access to the security system portal 314 running on the security system server 106. The portal application 424 can be implemented as one or more of a web-based application, one or more programs stored locally in the system disk 414 and/or the memory 412, a virtual compute instance, and/or some other suitable format of executable software instructions.

In operation, an integrator can use the portal application 424 to log into the integrator account (e.g., via the display device 416 and/or I/O devices 418) and access the security system 100 via the security system portal 314. While logged in to the portal application 424 as the integrator account, the integrator can access the security system 100 in accordance with the permissions that are currently assigned to the integrator account.

For example, prior to activation of the security system 100 and/or prior to the primary end user account assuming control of the security system 100 while administrative permissions are assigned to the integrator account, using the portal application 424, the integrator can log in to the integrator account and access the security system 100 with the administrative permissions. As described herein, accessing the security system 100 with administrative permissions can include one or more of viewing security data that was generated by the security devices 104 and stored in the security system server 106, activating the security system 100, remotely controlling operation of a security device 104, adding a new security device 104 to the security system 100, removing an existing security device 104 from the security system 100, viewing which and/or how many security devices 104 are active in the security system 100, creating new user accounts associated with the security system 100, assigning permissions to user accounts associated with the security system 100, modifying permissions assigned to user accounts associated with the security system 100, provisioning the security system server 106, and/or various other management and control features associated with the security system 100.

**In** some examples, using the portal application 424, an integrator can log in to an integrator account to expand the security system 100. Expanding the security system 100 can include, for example, adding new security devices 104 to the security system 100, creating new user accounts, associating new user accounts with the security system 100, and/or performing one or more other actions associated with expanding the current scope of the security system 100.

**As** another example, after the permissions of the integrator account have been limited (e.g., following a request to activate the security system 100, following the primary end user account assuming control of the security system 100, and/or following activation of the security system 100), using the portal application 424, the integrator can log in to the integrator account and access the security system with limited permissions. As described herein, in some examples, accessing the security system 100 with limited permissions may include being limited to viewing performance metrics associated with the security devices 104 included in the security system 100 (e.g., viewing whether particular security devices 104 are malfunctioning or properly functioning) and/or viewing other telemetry data associated with the security system 100. Moreover, in some examples, accessing the security system 100 with limited permissions may include being prevented from viewing security data generated by the security devices 104 and/or being prevented from performing one or more of the above-described operations for accessing the security system 100 that are enabled with administrative permissions. In some examples, accessing the security system 100 with limited permissions may include having a limited amount of time (e.g., 30 days, 45 days, etc.) to perform one or more operations for accessing the security system 100 described herein. For instance, the breadth of actions permitted to the integrator may be substantially unchanged during the time-limited period, but once the time-limited period comes to an end, the permissions of the integrator may be further restricted such that a less expansive number of actions are permitted.

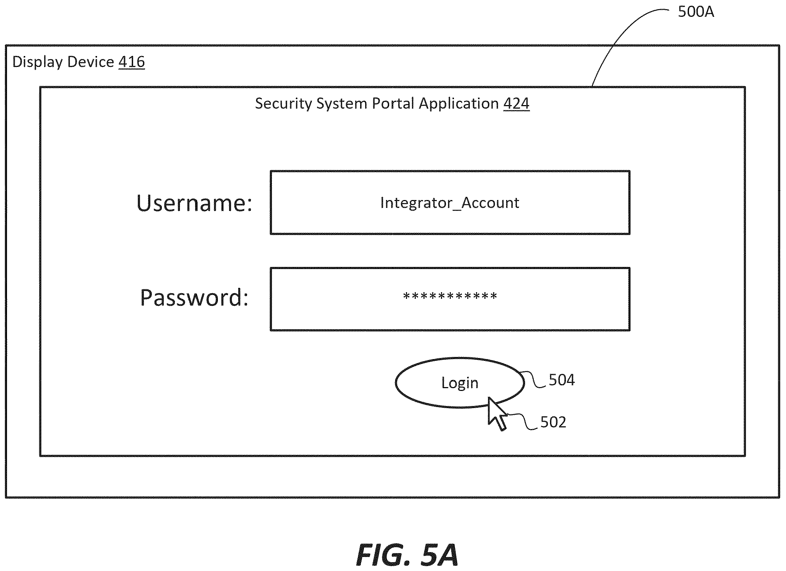

FIGS. 5A-5F illustrate an example process for integrating the security system 100 with a cloud-based service, according to the present teachings. For example, FIGS. 5A-5F illustrate various example windows, or graphical user interfaces, that are presented to an integrator while the integrator uses the security system portal application 424 to integrate the security system 100 with the security system portal 314. During the example process illustrated in FIGS. 5A-5F, administrative permissions are assigned to the integrator account. In some embodiments, different user accounts may be responsible for interacting with the different example windows during the phases illustrated therein. For example, some users at the integrator may be responsible for purchasing components for the security system 100 whereas other users at the integrator may be responsible for building a quote and/or activating the security system 100. In that regard, different integrator accounts may be used to perform one or more of the steps and/or actions described herein with respect to FIGS. 5A-5F.

FIG. 5A illustrates a first window 500A that is presented, via the display device 416, to the integrator when the integrator logs in to the portal application 424. As shown, the integrator can log in to the integrator account by providing the username "Integrator_Account" and the corresponding password. After providing the username and password, the integrator can use the cursor 502 to select the login button.

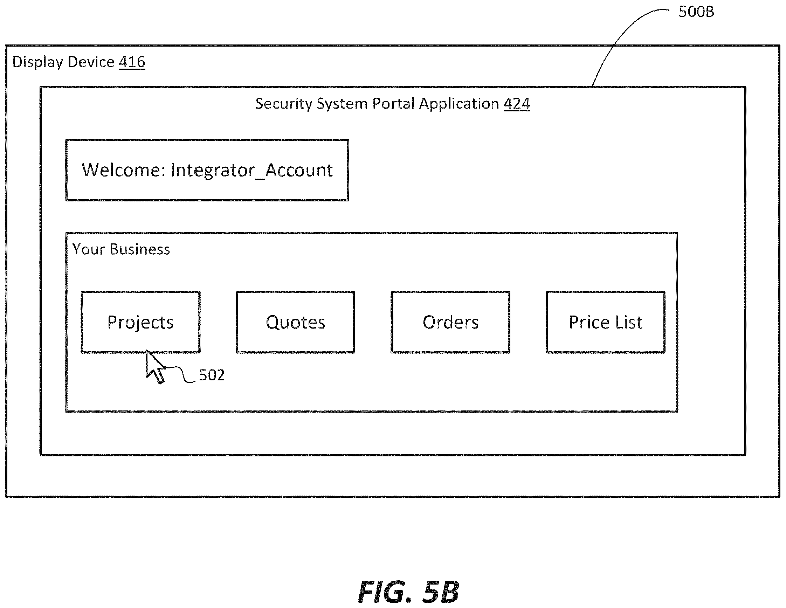

FIG. 5B illustrates a second window 500B that is presented, via the display device 416, to the integrator after the integrator logs in to the portal application 424 with the integrator account. The second window 500B presents a variety of options that can be selected by the integrator to begin designing and/or obtaining pricing for the integration of the security system 100 with the security system portal 314. In the illustrated example of FIG. 5B, the integrator selects the "Projects" tab using cursor 502 to begin designing the security system 100.

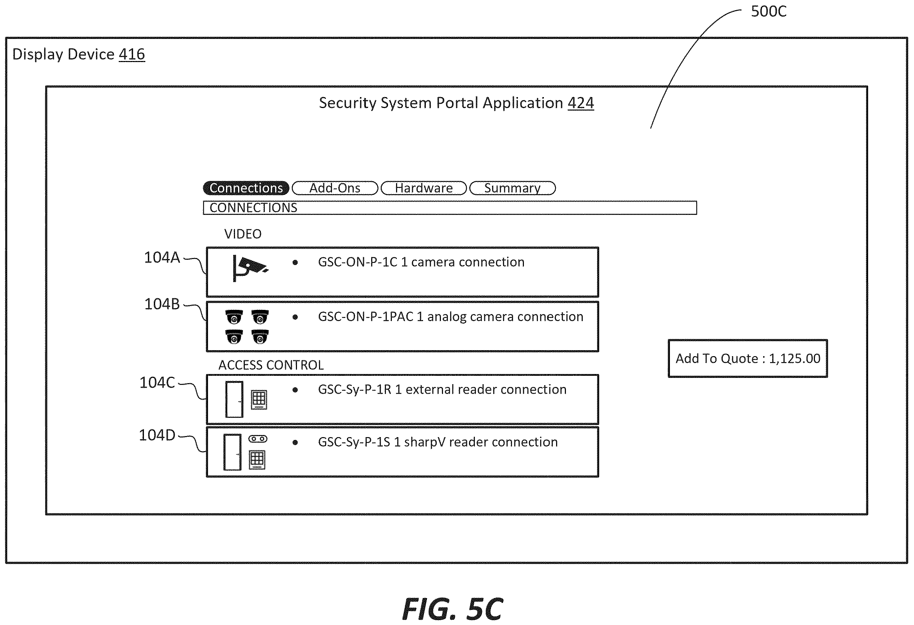

FIG. 5C illustrates a third window 500C that is presented, via the display device 416, to the integrator after the integrator selects the "Projects" tab on the second window 500B and begins designing the security system 100. As described herein, designing the security system 100 can include selecting security devices 104 included in the security system 100 that are to be connected to and/or installed with the security system portal 314. As shown in the illustrated example of the FIG. 5C, the integrator has selected to integrate a first surveillance camera 104A, a second surveillance camera 104B, a first access control 104C, and a second access control 104D included in the security system 100 with the security system portal 314.

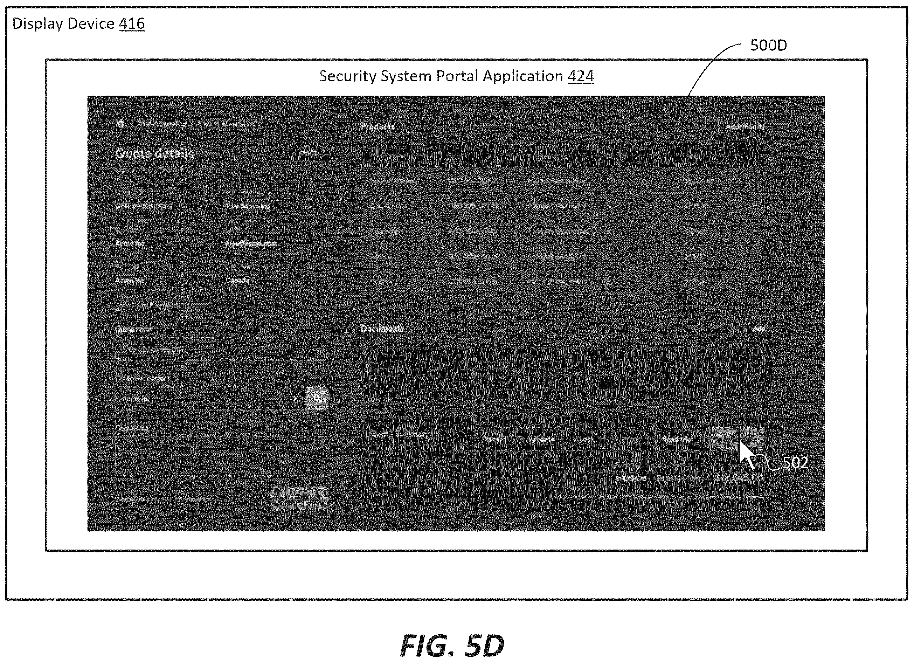

FIG. 5D illustrates a fourth window 500D that is presented, via the display device 416, to the integrator after the integrator selects the various security devices 104A-104D to be installed as part of security system 100. As shown, the fourth window 500D displays the price of integrating, or connecting, the security devices 104A-104D included in the security system 100 with the security system portal 314. Using the cursor 502, the integrator can proceed with purchasing the solution that integrates the security devices 104A-104D with the security system portal 314.

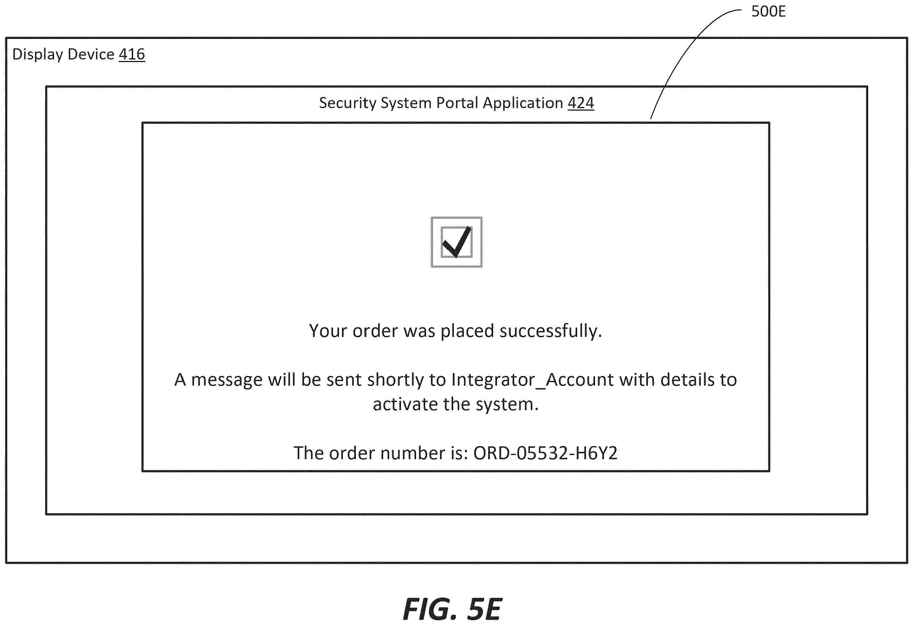

FIG. 5E illustrates a fifth window 500E that is presented, via the display device 416, to the integrator after the integrator purchases the integration solution. As shown, the fifth window 500E confirms that the integration solution was successfully ordered. The fifth window 500E further indicates that a message including details for activating the security system 100 with respect to the security system portal 314 will be sent to the integrator account. For example, if a first integrator account is used to purchase the integration solution, but a different integrator account is responsible for "integrating" the integration solution, the message including details for activating the security system 100 may be sent to the different integrator account.

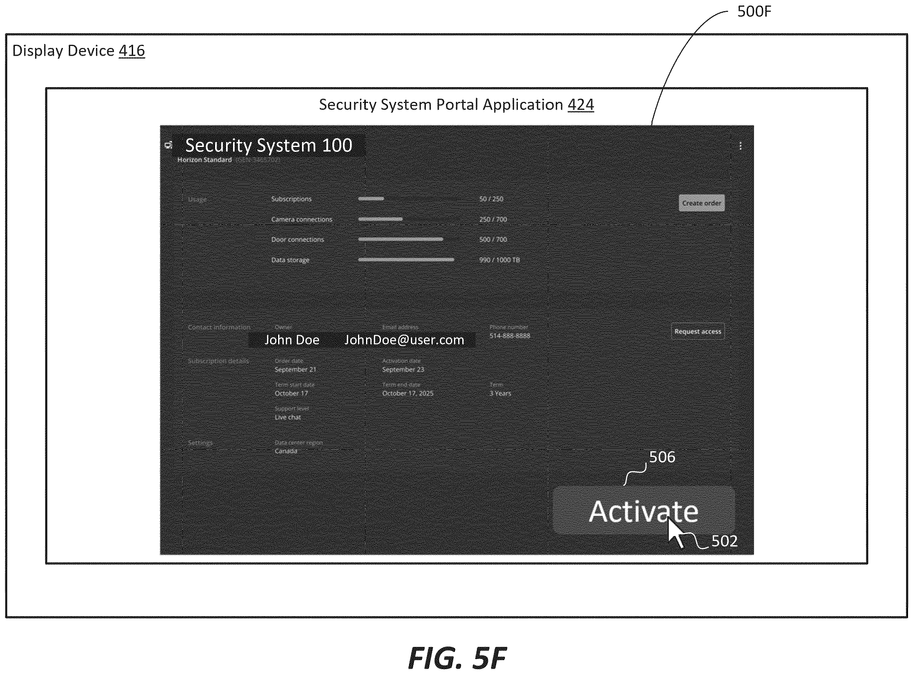

FIG. 5F illustrates a sixth window 500F that is presented, via the display device 416, to the integrator after the integrator purchases the integration solution. As shown, the sixth window 500F includes a message that prompts the integrator to activate the security system 100. In one example, the permissions management application 316 generates and transmits a message that prompts the integrator account to activate the security system 100 to the integrator account. The message that prompts the integrator account to activate the security system 100 can be implemented as one or more of an e-mail, a text message, and/or a pop-up notification that is displayed to the integrator via the display device 416. The user can request activation of the security system 100 by using the cursor to select the "activate" tab 506 included in the sixth window 600A.

As described herein, following a request to activate of the security system 100 and/or the primary end user account assuming control of the security system 100, the permissions management application 316 can restrict the administrative permissions of the integrator account and assign limited permissions to the integrator account. Furthermore, following receiving the request to activate the security system 100 from the integrator account, the permissions management application 316 can prompt the primary end user account to assume control (e.g., to accept legal terms for using) the security system 100 in conjunction with the security system portal 314. The primary end user can assume control of the security system 100, for example, by using the end user computing device 110 to accept the legal terms for using the security system 100 in conjunction with the security system portal 314.

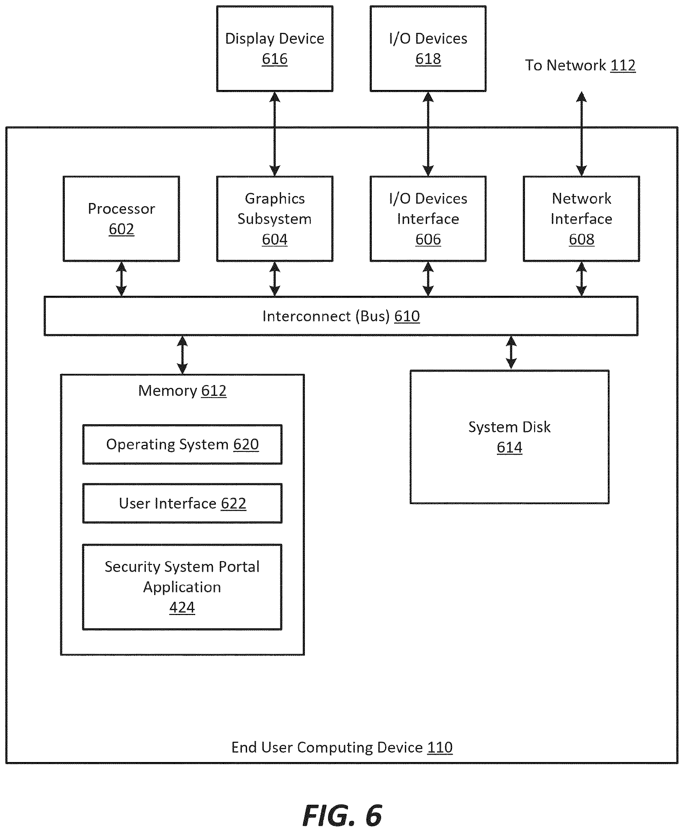

In some examples, activation of the security system 100 (e.g., via selection of the button 506 and/or some other means for requesting activation of the security system 100) is decoupled from prompting, via e-mail, or via the security system portal 314, the primary end user to assume control of the security system 100. For example, as described herein, a staging period may occur between the time at which the integrator account activates the security system 100 and the time at which the primary end user account is prompted, via e-mail or some other means, to assume control of the security system 100. In such examples, when the staging period is complete, the integrator may then re-log in to the portal application 424 with the integrator account and request handoff of the security system 100 to the primary end user account. Following receiving the request to handoff the security system 100 from the integrator account, the permissions management application 316 can prompt the primary end user account to assume control (e.g., to accept legal terms for using) the security system 100 in conjunction with the security system portal 314.FIG. 6 is a block diagram of an end user computing device 110 that may be implemented in conjunction with the computing system 102, according to present teachings. The end user computing device 110 can be similar in construction to the integrator computing device 108. For example, the end user computing device 110 may implemented as one or more of a desktop computer, a laptop, a tablet, a smart phone, a server, or some other similar computing device. In some examples, the integrator computing device 108 and the end user computing device 110 can be implemented using the same computing device.

As shown, the end user computing device 110 may include, without limitation, a processor 602, a graphics subsystem 604, an I/O devices interface 606, a network interface 608, an interconnect 610, a memory subsystem 612, and a system disk 614. The interconnect 610 is adapted to facilitate transmission of data, such as programming instructions and application data, between the processor 602, the graphics subsystem 604, the I/O devices interface 606, the network interface 608, the memory subsystem 612, and the system disk 614.

In some embodiments, the processor 602 (e.g., a CPU or similar processor) is adapted to retrieve and execute programming instructions stored in the memory subsystem 612. Similarly, the processor 602 is adapted to store and retrieve application data (e.g., software libraries) residing in the memory subsystem 612 and/or the system disk 614. The interconnect 610 is adapted to facilitate transmission of data, such as programming instructions and application data, between the processor 602, the graphics subsystem 604, the I/O devices interface 606, the network interface 608, the memory subsystem 612, and the system disk 614.

In some embodiments, the graphics subsystem 604 is adapted to generate frames of image and/or video data and transmit the frames of image and/or video data to display device 616. In some embodiments, the graphics subsystem 604 may be integrated into an integrated circuit, along with the processor 602. The display device 616 may comprise any technically feasible means for generating an image for display. For example, the display device 616 may be fabricated using liquid crystal display (LCD) technology, cathode-ray technology, and light-emitting diode (LED) display technology. The display device 616 may include, for example, one or more monitors.

The input/output (I/O) device interface 606 is adapted to receive input data from user I/O devices 618 and transmit the input data to the processor 602 via the interconnect 610. For example, user I/O devices 618 may comprise one or more buttons, a keyboard, and a mouse or other pointing device. The I/O device interface 606 also includes an audio output unit adapted to generate an electrical audio output signal. User I/O devices 618 may comprise one or more speakers adapted to generate an acoustic output in response to the electrical audio output signal. In alternative embodiments, the display device 616 may include the speaker. In some examples, one or more security devices 104 can be connected to the end user computing device 110 via the I/O devices interface 606.

**The** network interface 608 is adapted to transmit and receive packets of data via the network 112. For example, the network interface 608 is used to receive security data from one or more security devices 104, transmit security data to the security system server 106, and/or access the security system 100 via the security system server 106. In some embodiments, the network interface 608 is adapted to communicate using the well-known Ethernet standard. The network interface 608 is coupled to the processor 602 via the interconnect 610.

The system disk 614, such as a hard disk drive or flash memory storage drive, is adapted to store non-volatile data. For example, the system disk 614 can store security data generated by the one or more security devices 104.

In some embodiments, the memory subsystem 612 includes programming instructions and application data that comprise an operating system 620, a user interface 622, and the security system portal application 424 described herein with respect to FIG. 4. The operating system 620 performs system management functions such as managing hardware devices including graphics subsystem 604, I/O device interface 606, the network interface 608, and system disk 614. The operating system 620 also provides process and memory management models for the user interface 622, and the security system portal application 424. The user interface 622, such as a window and object metaphor, provides a mechanism for user interaction with end user computing device 110. Persons skilled in the art will recognize the various operating systems and user interfaces that are well-known in the art and suitable for incorporation into the end user computing device 110.

As described herein with respect to FIG. 4, the security system portal application 424, which can simply be referred to hereinafter as the portal application 424, provides access to the security system portal 314 running on the security system server 106. The portal application 424 can be implemented as one or more of a web-based application, one or more programs stored locally in the system disk 614 and/or the memory 612, a virtual compute instance, or some other suitable format of executable software instructions.

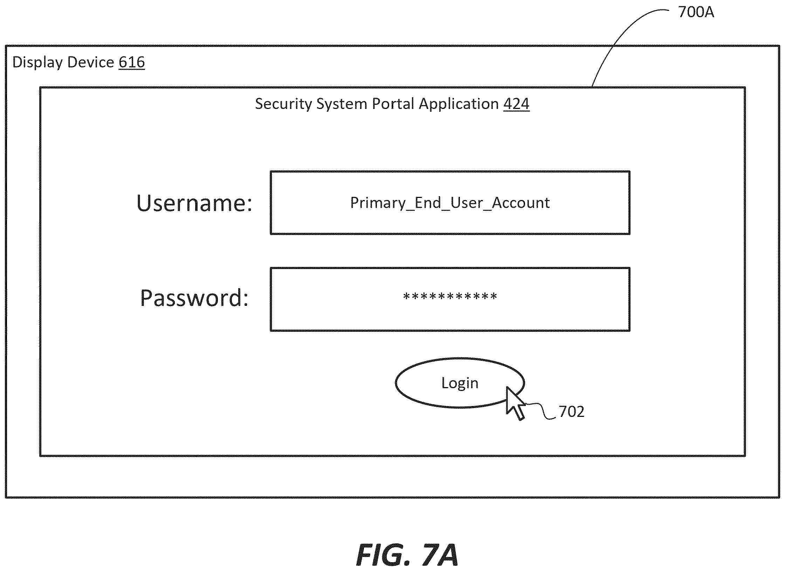

In operation, an end user, or owner, of the security system 100 can use the portal application 424 to log in to the primary end user account (e.g., via the display device 616 and/or I/O devices 618) and access the security system 100 via the security system portal 314. FIG. 7A illustrates an example login window 700A for the portal application 424, according to the present teachings. The login window 700A is presented to the end user, for example, via the display device 616 of the end user computing device 110. As shown, an end user can log in to the primary end user account by providing the username "Primary_End_User_Account" and the corresponding password. After providing the username and password, the end user can use the cursor 702 to select the login button.

As described herein, following receipt of the request to activate the security system 100 from the integrator account, the permissions management application 316 can prompt the primary end user account to assume control of the security system 100. In some examples, prompting the primary end user account to assume control of the security system 100 can include prompting the primary end user account to accept the legal terms for operating the security system 100 in conjunction with the security system portal 314. The permissions management application 316 can prompt the primary end user account to accept the legal terms by, for example, transmitting a message containing a link to accept the legal terms to the primary end user account. The message containing the link to accept the legal terms to the primary end user account can be implemented as one or more of an e-mail, a text message, a pop-up notification that is displayed via the display device 616 of the end user computing device 110, and/or some other message suitable for prompting the primary end user account to accept the legal terms. In some examples, the permissions management application 316 can prompt the primary end user account to accept the legal terms by causing display of a button, icon, link, and/or some other feature within the portal application 424 on the display device 616 while the primary end user account is logged in to the portal application 424.

In one example, the permissions management application 316 prompts the primary end user account to accept the legal terms in response to the end user logging in to the primary end user account for the first time since the permissions management application 316 received the request to activate the security system 100 from the integrator account. For example, if the end user logs in to the primary end user account at login window 700A for the first time since the integrator account requested activation of the security system 100, the permissions management application 316 may prompt, via the portal application 424 displayed on display device 616, the primary end user account to accept the legal terms (e.g., T&Cs, ToS, etc.) for operating the security system 100 in conjunction with the security system portal 314.

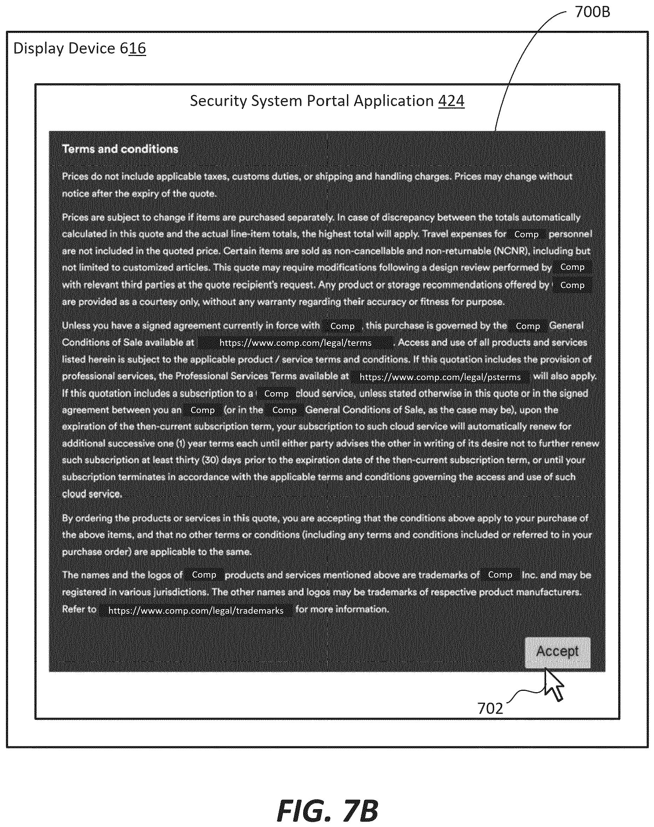

FIG. 7B illustrates an example window 700B that prompts the primary end user account to accept the legal terms (e.g., T&Cs, ToS, etc.) for operating the security system 100 in conjunction with the security system portal 314, according to the present teachings. The window 700B may be presented to the primary end user account, via the display device 616, in response to the end user logging into the portal application 424 with the primary end user account. The end user can accept the legal terms (e.g., T&Cs, ToS, etc.) with the cursor 702.

As described herein, in response to the primary end user account accepting the legal terms, the permissions management application 316 hands over control of the security system 100 from the integrator account to the primary end user account. Further in response to the primary end user account accepting the legal terms, the permissions management application 316 modifies the permissions assigned to the primary end user account. In particular, the permissions management application 316 can assign the administrative permissions to the primary end user account in response to the primary end user account accepting the legal terms.

When the primary end user account is assigned the administrative permissions, the primary end user account has substantially unrestricted access to the security system 100 as described herein. For example, with administrative permissions, the primary end user account can view security data that was generated by the security devices 104 and stored in the security system server 106, activate and/or deactivate the security system 100, remotely control operation of a security device 104, add a new security device 104 to the security system 100, remove an existing security device 104 from the security system 100, view which and/or how many security devices 104 are active in the security system 100, provision the security system server 106, and/or various other management and control features associated with the security system 100. In some examples, the primary end user account can delete one or more user accounts, such as integrator accounts and/or secondary end user accounts. In some examples, when the primary end user account is assigned administrative permissions, there are still certain actions (e.g., buying add-on devices) that the primary end user account is restricted from performing. In that regard, in such examples, administrative permissions for the primary end user account (e.g., substantially unrestricted permissions) may be different than administrative permissions for an integrator account (e.g., unrestricted permissions).

Furthermore, with the administrative permissions, the primary end user account can manage the permissions assigned to one or more other accounts associated with the security system 100. For example, with the administrative permissions, the primary end user account can generate one or more secondary end user accounts, modify the permissions assigned to the one or more secondary end user accounts, and/or modify permissions assigned to one or more integrator accounts. When the primary end user account modifies permissions assigned to secondary end user accounts and/or the integrator account, the permissions management application 316 can update the user account data 322 stored in the system disk 312 to reflect the changes to the respective permissions.

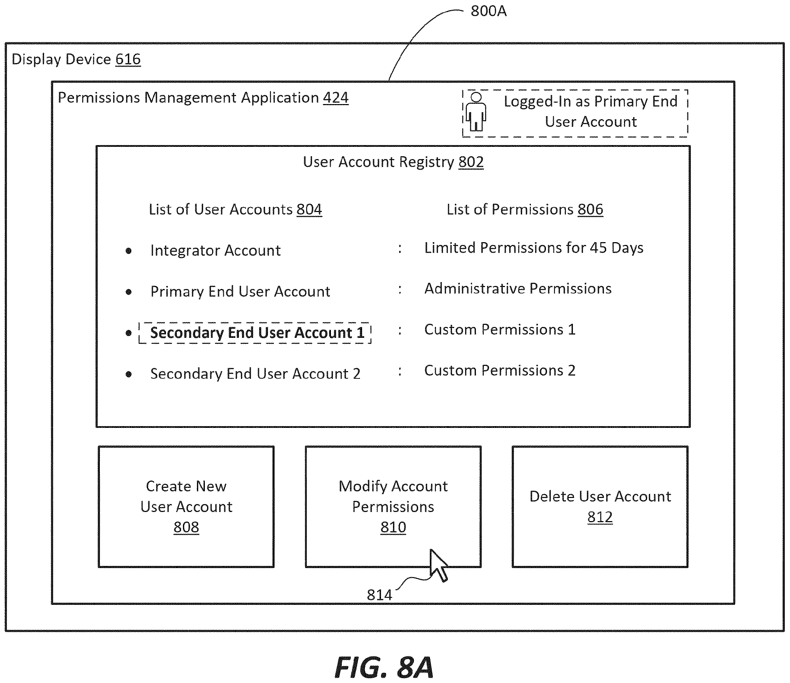

FIG. 8A illustrates an example window 800A that can be presented to a user by the computing system 102 for managing user accounts associated with the security system 100, according to the present teachings. For example, the window 800A can be displayed, via the display device 616, when the end user logs into the portal application 424 with the primary end user account and navigates the portal application 424 to a user account management option. Although the example of FIG. 8A is described with respect to the primary end user account, the description of FIG. 8A is also applicable to an integrator logged in to the integrator account while the integrator account is assigned administrative permissions.

As shown in FIG. 8A, the window 800A includes a user account registry 802 that is visible to the primary end user account when the primary end user account has administrative permissions. The user account registry 802 includes a list of user accounts 804 associated with the security system 100 that are currently active and a corresponding list of permissions 806 that are assigned to active user accounts. In the illustrated example of FIG. 8A, the list of user accounts 804 includes the integrator account, the primary end user account, the secondary end user account 1, and the secondary end user account 2. As further shown in the illustrated example of FIG. 8A, the list of permissions 806 indicates that the integrator account is assigned limited permissions for 45 days, the primary end user account is assigned administrative permissions, the secondary end user account 1 is assigned a first set of custom permissions (Custom Permissions 1), and the secondary end user account 2 is assigned a second set of custom permissions (Custom Permissions 2).

The window 800A further includes various selectable options for managing user accounts associated with the security system 100. For example, the window 800A includes a first selectable option 808 for creating a new user account, a second selectable option 810 for modifying permissions assigned to a user account, and a third selectable option 812 for deleting a user account. The end user can select one or more of the selectable options using the cursor 814. Persons skilled in the art will understand that the selectable options for managing user accounts illustrated in FIG. 8A are provided as non-limiting examples, and that in some embodiments, a different number of selectable options for managing user accounts can be presented in the window 800A.

To modify the permissions assigned to a user account while logged in to the primary end user account with administrative permissions, the end user can select, using the cursor 814, a user account in the list of user accounts 804 and the second selectable option 810 for modifying permissions assigned to a user account. For example, in the illustrated example of FIG. 8A, the primary end user account selects, using the cursor 814, the secondary end user account 1 included in the list of user accounts 804 and the second selectable option 810 to modify the permissions assigned to the secondary end user account 1.

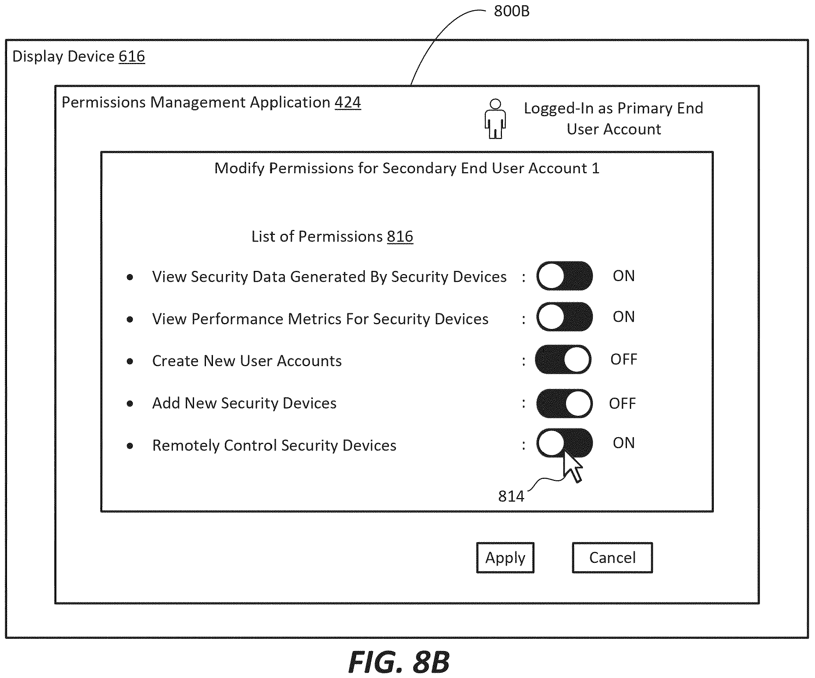

FIG. 8B illustrates an example window 800B that can be presented to a user by the computing system 102 for modifying permissions assigned to a user account associated with the security system 100, according to the present teachings. For example, the portal application 424 presents, via the display device 616, the window 800B to an end user logged in to the primary end user account in response to receiving a selection to modify the permissions assigned to the secondary end user account 1.

As shown in FIG. 8B, the window 800B includes a list of permissions 816 that can selectively be turned ON or OFF for the secondary end user account 1. In the illustrated example of FIG. 8B, the list of permissions includes 816 includes permissions to "View Security Data Generated By Security Devices," "View Performance Metrics For Security Devices," "Create New User Accounts," "Add New Security Devices," and "Remotely Control Security Devices."

Each permission included in the list of permissions 816 can selectively be turned ON or OFF via a corresponding toggle switch adjacent the permission. In the illustrated example of FIG. 8B, the permissions "View Security Data Generated By Security Devices," "View Performance Metrics For Security Devices," and "Remotely Control Security Devices" are turned ON, or enabled, for the secondary end user account 1. Furthermore, the permissions "Create New User Accounts" and "Add New Security Devices" are turned OFF, or disabled, for the secondary end user account 1. The cursor 814 can be used to turn the respective toggle switches in window 800B ON and OFF.

Persons skilled in the art will understand that the list of permissions 816 illustrated in FIG. 8B is provided as a non-limiting example, and that in some embodiments, the list of permissions 816 can include more permissions or fewer permissions associated with the security system 100 than the five permissions shown in FIG. 8B. In some examples, the window 800B further provides the primary end user account the option to apply time-based restrictions to the permissions assigned to a user account. For example, using window 800B, the primary end user account can define an amount of time (e.g., 45 days) for which the permissions assigned to the user account are active. In such an example, after expiration of the amount of time, the permissions assigned to the user account are disabled. Furthermore, although the illustrated example of FIG. 8B is described with respect to modifying the permissions assigned to the secondary end user account 1, persons skilled in the art will understand that the description provided herein with respect FIG. 8B is equally applicable to modifying the permissions assigned to other user accounts, such as the secondary end user account 2 or the integrator account.

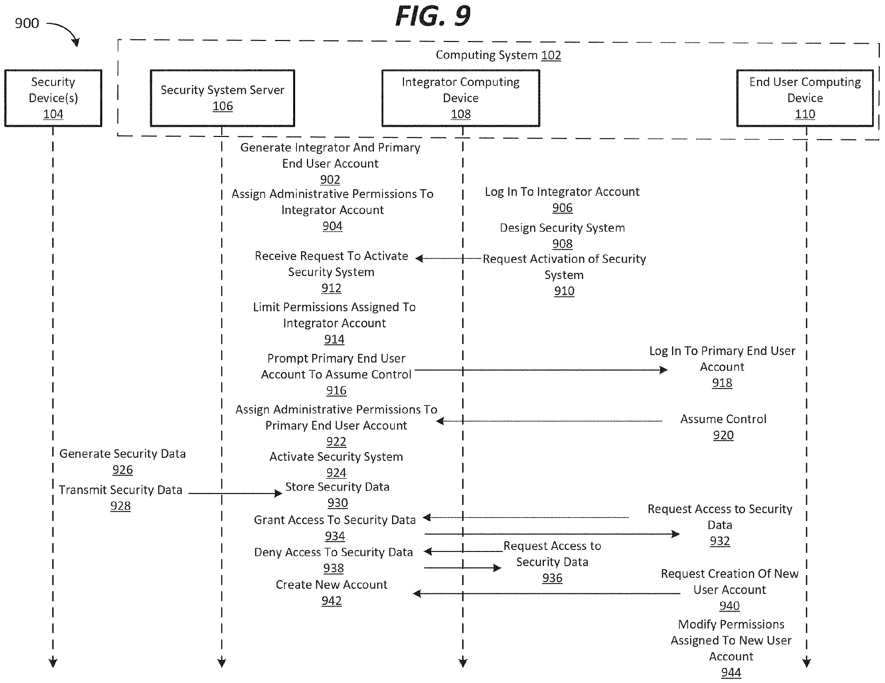

FIG. 9 illustrates an example flow diagram of a process 900 for managing permissions for a security system, according to the present teachings. Although the interaction between the devices in process 900 are shown in an order, persons skilled in the art will understand that the interactions may be performed in a different order, interactions may be repeated or skipped, and/or may be performed by components other than those described in FIG. 9. Moreover, the process 900 may include additional interactions and/or steps that are not explicitly shown and/or described herein.

In the illustrated example of FIG. 9, the computing system 102 is shown as including a security system server 106, an integrator computing device 108, and an end user computing device 110. However, persons skilled in the art will understand that, in some examples, the computing system 102 can include more or fewer computing devices. Moreover, persons skilled in the art will understand that, in some examples, one or more actions described as being performed by one computing device in the process 900 may alternatively performed by a different computing device.

Furthermore, in the illustrated example of FIG. 9, the security system 100 is shown as including only one security device 104 connected to the computing system 102. However, persons skilled in the art will understand that the security system 100 can include any number of security devices 104 connected to the computing system 102. In some examples, the process 900 can be implemented by a data management system that does not include and/or is not coupled to security device(s) 104. In such examples, the security device(s) 104 may be replaced with one or more other devices that generate telemetry data, operational data, management data, administrative data, and/or other types of data associated with an organization.

Process 900 begins at step 902 at which the security system server 106 creates the integrator account and the primary end user account. For example, the permissions management application 316 running on the security server 106 generates the integrator account and the primary end user account. In some examples, the permissions management application 316 does not generate the primary end user account until after the integrator account, assigned with administrative permissions, requests creation of the primary end user account. In some examples, at step 902, the permissions management application 316 further associates the integrator account and/or the primary end user account with the security system 100. In some examples, the integrator account already exists at step 902. In such examples, the permissions management application 316 simply associates the integrator account with the security system 100 at step 902.

At step 904, the security system server 106 assigns administrative permissions to the integrator account. For example, the permissions management application 316 running on the security system server 106 assigns administrative permissions to the integrator account before the security system 100 is designed and/or activated.

At step 906, a user logs in to the integrator account on the integrator computing device 108. For example, the integrator logs into the portal application 424 running on the integrator computing device 108 with login credentials for the integrator account.

At step 908, the integrator computing device 108 designs the security system 100. For example, while the integrator is logged in as the integrator account in the portal application 424 running on the integrator computing device 108, the integrator account can use administrative permissions to design the security system 100 as described herein (e.g., add and configure security devices 104 to the security system 100, integrate the security devices 104 with the security system portal 314, etc.).

At step 910, the integrator computing device 108 requests activation of the security system 100. For example, while the integrator is logged in as the integrator account in the portal application 424 running on the integrator computing device 108, the integrator account can use administrative permissions to request activation of the security system 100.

At step 912, the security system server 106 receives the request to activate the security system 100. For example, the permissions management application 316 running on the security server 106 receives the request to activate the security system 100.

At step 914, following receipt of the request to activate the security system 100, the security system server 106 limits the permissions assigned to the integrator account. For example, the permissions management application 316 running on the security server 106 restricts the administrative permissions of the integrator account and assigns limited permissions to the integrator account. As described herein, in some examples, assigning limited permissions to the integrator account can include restricting the integrator account from viewing security data generated by the security device 104 and/or applying time-based permissions to the integrator account that expire after a particular amount of time (e.g., 45 days).

At step 916, further following receipt of the request to activate the security system 100, the security system server 106 prompts the primary end user account to assume control of the security system 100. For example, the security system server 106 prompts the primary end user account to accept the legal terms for operating the security system 100 in conjunction with the security system portal 314. In some examples, the permissions management application 316 running on the security server 106 prompts the primary end user account to accept the legal terms by sending a message, such as an e-mail or text message, including the legal terms to a user account, by presenting a pop-up window containing the legal terms to a user account, and/or by using some other suitable means for prompting the primary end user account to accept the legal terms.

As described herein, in some examples, a staging period occurs between steps 910, 912 and steps 914, 916. That is, a staging period during which an integrator may purchase, install, and/or configure security devices 104 included in the security system 100 may occur after the integrator computing device 108 requests activation of the security system 100 (e.g., steps 910, 912) and before the security system server 106 limits the permissions assigned to the integrator account (e.g., step 914) and/or the security system server 106 prompts the primary end user account to assume control of the security system 100 (step 916). In such examples, the process 900 may include a step (e.g., step 915) that occurs between step 912 and steps 914, 916 at which the integrator computing device 108 requests handoff of the security system 100 from the integrator account to the primary end user account following completion of the staging period.

At step 918, a user logs in to the primary end user account on the end user computing device 110. For example, an end user logs into the portal application 424 running on the end user computing device 110 with login credentials for the primary end user account.

At step 920, the end user computing device 110 assumes control of the security system 100. For example, while the end user is logged in as the primary end user account in the portal application 424 running on the end user computing device 110, the primary end user account accepts the assumes control of the security system 100 by accepting legal terms included in a message and/or pop-up notification received from the permissions management application 316. In some embodiments, the security system server 106 stores a record or other consultable indication of the acceptance of the legal terms, for instance in a blockchain or other storage mechanism.

At step 922, the security system server 106 assigns administrative permissions to the primary end user account in response to acceptance of the legal terms (e.g., T&Cs, ToS, etc.). For example, the permissions management application 316 running on the security system server 106 assigns administrative permissions to the primary end user account in response to acceptance of the legal terms (e.g., T&Cs, ToS, etc.).

At step 924, the security system server 106 activates the security system 100 in response to acceptance of the legal terms. For example, the permissions management application 316 running on the security system server 106 activates the security system 100 to operate in conjunction with the security system portal 314 in response to acceptance of the legal terms. In some examples, step 914 occurs in the process 900 after step 922 and/or after step 924. That is, in some examples, the security system server 106 limits the permissions assigned to the integrator account after the primary end user account assume control of the security system 100 at step 922 and/or after the security system 100 is activated at step 924. In some examples, the security system server 106 deletes the integrator account after the primary end user account assume control of the security system 100 at step 922 and/or after the security system 100 is activated at step 924.

As described herein, in some examples, the security system 100 has already been activated prior to step 924. For example, the security system server 106 may have activated the security system 100 after receiving a request to activate the security system 100 from the integrator computing device 108 at step 912. In such examples, rather than activating the security system 100 in response to acceptance of the legal terms at step 924 (e.g., because the security system 100 is already "activated"), the security system server 106 hands off control of the activated security system 100 to the primary end user account at step 924.

At step 926, the security device 104 generates security data while the security system 100 is active. At step 928, the security device 104 transmits the security data to the security system server 106. For example, the security device 104 transmits the security data directly to the security system server 106 via the communications network 112 and/or indirectly to the security system server 106 via the integrator computing device 108 or the end user computing device 110. For examples, in which the security device 104 is replaced with some other type of device, the data generated at step 926 can be, for example, telemetry data, operational data, management data, administrative data, and/or other types of data associated with an organization.

At step 930, the security system server 106 stores the security data generated by the security device 104. For example, the security system portal 314 running on the security system server 106 stores the security data as security data 320 in the system disk 312

At step 932, the end user computing device 110 requests access to the security data 320 stored in system disk 312. For example, while the end user is logged in as the primary end user account in the portal application 424 running on the end user computing device 110, the primary end user account requests access to the security data 320 stored in the system disk 312.

At step 934, the security system server 106 grants the end user computing device 110 access to the security data 320 stored in the system disk 312. For example, the permissions management application 316 allows the primary end user account to access the security data 320 because the administrative permissions are currently assigned to the primary end user account.

At step 936, the integrator computing device 108 requests access to the security data 320 stored in system disk 312. For example, while the integrator is logged in as the integrator account in the portal application 424 running on the integrator computing device 108, the integrator account requests access to the security data 320 stored in the system disk 312.

At step 938, the security system server 106 denies the integrator computing device 108 access to the security data 320 stored in the system disk 312. For example, the permissions management application 316 denies the primary end user account access the security data 320 because limited permissions that prevent access to security data generated by the security device 104 are currently assigned to the integrator account.

At step 940, the end user computing device 110 requests creation of a new user account. For example, while the end user is logged in as the primary end user account in the portal application 424 running on the end user computing device 110, the primary end user account requests to create a new secondary end user account.

At step 942, the security system server 106 grants the request and generates the new user account. For example, the permissions management application 316 generates the new secondary end user account in response to the request from the primary end user account because the administrative permissions are currently assigned to the primary end user account.

At step 944, the end user computing device 110 modifies the permissions assigned to new user account. For example, while the end user is logged in as the primary end user account in the portal application 424 running on the end user computing device 110, the primary end user account modifies the permissions assigned to the new secondary end user account as described herein with respect to FIG. 8B.

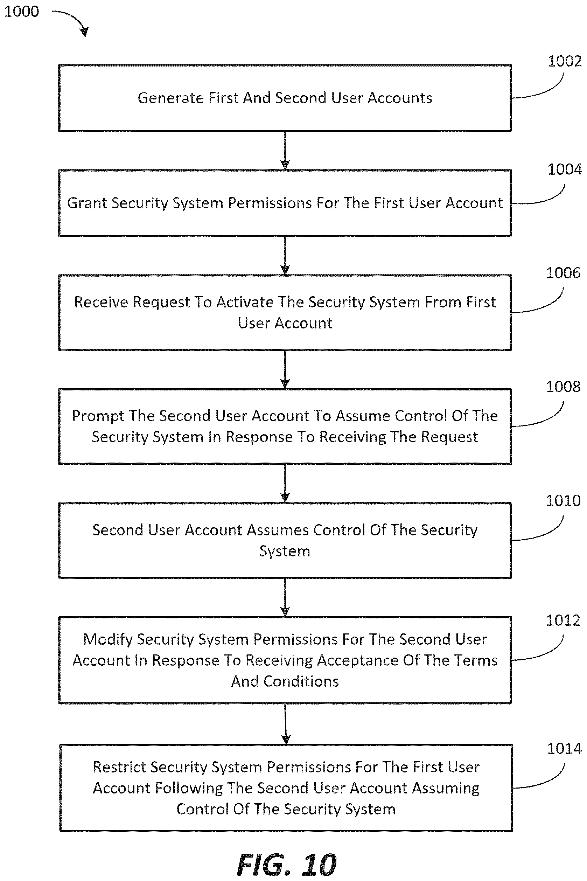

FIG. 10 is a flow diagram of method steps managing permissions for a security system, according to the present teachings. Although the method steps are described with reference to the systems and processes of FIGS. 1-9, persons skilled in the art will understand that any system adapted to implement the method steps, in any order, falls within the scope of the present invention.

As shown, a method 1000 begins at step 1002, where first and second user accounts associated with a security system are generated. For example, the computing system 102 generates an integrator account and a primary end user account associated with the security system 100.

At step 1004, security system permissions for a first user account are granted. For example, the computing system 102 grants administrative permissions to the integrator account.

At step 1006, a request to activate the security system is received from the first user account. For example, the computing system 102 receives a request to activate the security system 100 from the integrator account.

At step 1008, the second user account is prompted to assume control of the security system. For example, the computing system 102 prompts the primary end user account to assume control of the security system 100 in response to receiving the request to activate the security system 100.

As described herein, in some examples, a staging period occurs between steps 1006 and 1008. That is, a staging period during which an integrator may purchase, install, and/or configure security devices 104 included in the security system 100 may occur after a request to activate the security system is received from the first user account at step 1006 and before the second user account is prompted to assume control of the security system at step 1008. In such examples, the process method 1000 may include a step (e.g., step 1007) that occurs between step 1006 and steps 1008 at which the firs user account requests handoff of the security system to the second user account following completion of the staging period.

At step 1010, the second user account assumes control of the security system. For example, the primary end user account assumes control of the security system 100 following acceptance of the legal terms.

At step 1012, security system permissions for the second user account are modified in response to control of the security system being assumed by the second user account. For example, the computing system 102 assigns administrative permissions to the primary end user account in response to the primary end user account assuming control of the security system 100.

At step 1014, security system permissions for the first user account are restricted following the second user account assuming control of the security system. For example, the computing system 102 restricts the permissions assigned to the integrator account following the primary end user account assuming control of the security system 100.

Any and all combinations of any of the claim elements recited in any of the claims and/or any elements described in this application, in any fashion, fall within the contemplated scope of the present disclosure and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method, or computer program product. Accordingly, aspects of the present disclosure may take the form of an entirely hardware embodiment, an entirely software embodiment (including firmware, resident software, microcode, etc.) or an embodiment combining software and hardware aspects that may all generally be referred to herein as a "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable processors.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the present teachings have been described above in terms of specific embodiments, it is to be understood that they are not limited to these disclosed embodiments. Many modifications and other embodiments will come to mind to those skilled in the art to which this pertains, and which are intended to be and are covered by both this disclosure and the appended claims. It is intended that the scope of the present teachings should be determined by proper interpretation and construction of the appended claims and their legal equivalents, as understood by those of skill in the art relying upon the disclosure in this specification and the attached drawings.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

Additional aspects:
1. A security system managing at least one security device adapted to generate security data, comprising:
   a computing system adapted to associate a first user account and a second user account with the security system, wherein the security system is associated with a first entity and wherein the first user account is associated with a third-party entity;
   the computing system adapted to grant permissions associated with the security system for the first user account;
   the computing system adapted to receive a request for activating the security system from the first user account;
   the computing system adapted to prompt the second user account to assume control of the security system following receiving the request;
   the computing system adapted to modify permissions associated with the security system for the second user account in response to the second user account assuming control of the security system; and
   the computing system adapted to restrict permissions associated with the security system for the first user account following the second user account assuming control of the security system.
2. The security system of aspect 1, wherein the second user account is associated with an owner of the security system.
3. The security system of aspect 1, wherein to prompt the second user to assume control of the security system, the computing system is adapted to prompt the user to accept legal terms for using the security system; and
   wherein the computing system is adapted to modify permissions associated with the security system for the second user account in response to the second user account accepting the legal terms.
4. The security system of aspect 3, wherein to prompt the second user account to accept the legal terms for using the security system, the computing system is adapted to transmit a message including the legal terms to the second user account.
5. The security system of aspect 1, wherein the permissions associated with the security system for the first user account comprise configuration permissions; and
   wherein to restrict the permissions associated with the security system for the first user account, the computing system is adapted to restrict the configuration permissions following the second user account assuming control of the security system.
6. The security system of aspect 1, wherein the permissions associated with the security system for the first user account comprise telemetry view permissions, and
   wherein to restrict the permissions associated with the security system for the first user account, the computing system is adapted to maintain the telemetry permissions.
7. The security system of aspect 1, wherein to restrict permissions associated with the security system for the first user account comprises restricting permissions associated with the security system for the first user account in response to the second user account assuming control of the security system; and
   wherein to restrict permissions associated with the security system for the first user account occurs after a predetermined delay following the second user account assuming control of the security system.
8. The security system of aspect 1, wherein the computing system is adapted to generate a third user account for the security system,
   wherein the third user account for the security system is associated with a client of the first entity; and
   wherein the computing system is adapted to assign permissions associated with the security system for the third user account based on a first input received from the second user account.
9. The security system of aspect 1, wherein the computing system is adapted to delete the third user account based on a second input received from the second user account.
10. The security system of aspect 1, wherein the computing system is a cloud-based computing system that includes:
   a plurality of processors coupled to each other via a network; and
   a plurality of displays coupled to the plurality of processors.
11. The security system of aspect 1, wherein the computing system is coupled to the at least one security device via a network.
12. The security system of aspect 1, wherein the computing system includes a storage device;
   wherein the computing system is adapted to receive the security data generated by the at least one security device; and
   wherein the computing device is adapted to store the security data in the storage device.
13. The security system of aspect 12, wherein the computing system is adapted to permit the second user account to access the security data stored in the storage device based on modified permissions associated with the security system for the second user account.
14. The security system of aspect 12, wherein the computing system is adapted to prevent the first user account from accessing the security data stored in the storage device based on restricted permissions associated with the security system for the first user account.
15. The security system of aspect 12, wherein the computing system is adapted to generate a third user account for the security system; and
   wherein the computing system is adapted to permit the third user account to access the security data stored in the storage device for a limited amount of time based on restricted permissions associated with the security system for the third user account.
16. The security system of aspect 1, wherein the computing system is adapted to prevent the first user account from accessing the at least one security device when a particular amount of time passes after activation of the security device.
17. The security system of aspect 1, wherein the computing system is adapted to prompt the first user account to accept legal terms for using the security system.
18. The security system of aspect 1, wherein the computing system is adapted to receive a request for creating the second user account from the first user account; and
   wherein the computing system is adapted to create the second user account in response to receiving the request for creating the second user account.
19. The security system of aspect 1, wherein the computing system is adapted
   to:
   receive a subsequent request for activating an expansion to the security system from a subsequent user account associated with a subsequent third-party entity;
   modify permissions associated with the subsequent user account in response to receiving the subsequent request;
   prompt the second user to assume control of the expansion in response to receiving the request; and
   modify subsequent permissions associated with the expansion for the second user account in response to the second user account assuming control of the expansion.
20. The security system of aspect 19, wherein responsive to the second user account assuming control of the expansion, the computing system is adapted to create a tertiary user account or modify permissions associated with the tertiary user account, the tertiary user account associated with a tertiary third-party entity.
21.A data management system, comprising:
   a computing system adapted to associate a first user account for the data management system, wherein the data management system is associated with a first entity and the first user account is associated with a third-party entity;
   the computing system adapted to generate a second user account for the data management system, wherein the second user account is associated with the first entity;
   the computing system adapted to receive a request to activate the security system from the first user account;
   the computing system adapted to prompt the second user account to assume control of the data management system in response to receiving the request to activate the data management system;
   the computing system adapted to grant permissions associated with the data management system for the second user account in response to the second user account assuming control of the data management system; and
   the computing system adapted to restrict permissions associated with the data management system for the first user account following the second user account assuming control of the data management system.
22. The data management system of aspect 21, further comprising a data storage device;
   wherein to generate the second user account, the computing system is adapted to assign the second user account owner permissions for accessing data stored in the data storage device and lock the owner permissions for accessing data stored in the data storage device.
23. The data management system of aspect 22, wherein to grant permissions associated with the data management system to the second user account, the computing system is adapted to unlock the owner permissions for accessing data stored in the data storage device.
24. The data management system of aspect 21, wherein to prompt the second user account to assume control of the data management system, the computing system is adapted to transmit a message including legal terms for using the data management system to the second user account.
25. The data management system of aspect 21, wherein to restrict permissions associated with the data management system for the first user account, the computing system is adapted to delete the first user account.
26.A security system, comprising:
   at least one surveillance camera adapted to generate video data;
   at least one access control adapted to control access to a door and generate security data associated with a number of times the door was accessed; and
   a computing system adapted to generate a first user account and a second user account for the security system;
   the computing system adapted to receive a request for activating the security system from the first user account;
   the computing system adapted to restrict permissions associated with the security system for the first user account following receiving the request, wherein to restrict the permissions associated with the security system for the first user account includes denying the first user account access to the video content and the security data;
   the computing system adapted to prompt the second user to assume control of the security system in response to receiving the request; and
   the computing system adapted to modify permissions associated with the security system for the second user account in response to the second user assuming control of the security system.
27.The security system of aspect 26, wherein the security system is associated with a first entity;
   wherein the first user account is associated with a third-party entity; and
   wherein the second user account is associated with the first entity.
28. The security system of aspect 26, wherein the computing system is adapted to delete the first user account following the second user account assuming control of the security system.
29. The security system of aspect 26, wherein the computing system is adapted to receive a request for creating the second user account from the first user account; and
   wherein the computing system is adapted to create the second user account in response to receiving the request for creating the second user account.

## Claims

1. A security system managing at least one security device adapted to generate security data, comprising:
a computing system adapted to associate a first user account and a second user account with the security system, wherein the security system is associated with a first entity and wherein the first user account is associated with a third-party entity;
the computing system adapted to grant permissions associated with the security system for the first user account;
the computing system adapted to receive a request for activating the security system from the first user account;
the computing system adapted to prompt the second user account to assume control of the security system following receiving the request;
the computing system adapted to modify permissions associated with the security system for the second user account in response to the second user account assuming control of the security system; and
the computing system adapted to restrict permissions associated with the security system for the first user account following the second user account assuming control of the security system.

2. The security system of claim 1, wherein the second user account is associated with an owner of the security system.

3. The security system of claim 1 or 2, wherein the permissions associated with the security system for the first user account comprise at least one of configuration permissions and telemetry view permissions; and
wherein to restrict the permissions associated with the security system for the first user account, the computing system is adapted to at least one of: restrict the configuration permissions following the second user account assuming control of the security system; and maintain the telemetry permissions.

4. The security system of any one of claims 1 to 3, wherein to restrict permissions associated with the security system for the first user account occurs after a predetermined delay following the second user account assuming control of the security system.

5. The security system of any one of claims 1 to 4, wherein the computing system is adapted to generate a third user account for the security system,
wherein the third user account for the security system is associated with a client of the first entity; and
wherein the computing system is adapted to assign permissions associated with the security system for the third user account based on a first input received from the second user account, and, optionally, to delete the third user account based on a second input received from the second user account.

6. The security system of any one of claims 1 to 5, wherein the computing system is a cloud-based computing system that includes:
a plurality of processors coupled to each other via a network; and
a plurality of displays coupled to the plurality of processors.

7. The security system of any one of claims 1 to 6, wherein the computing system is coupled to the at least one security device via a network.

8. The security system of any one of claims 1 to 7, wherein the computing system includes a storage device;
wherein the computing system is adapted to receive the security data generated by the at least one security device; and
wherein the computing device is adapted to store the security data in the storage device.

9. The security system of claim 8,
wherein the computing system is adapted to permit the second user account to access the security data stored in the storage device based on modified permissions associated with the security system for the second user account, and/or
wherein the computing system is adapted to prevent the first user account from accessing the security data stored in the storage device based on restricted permissions associated with the security system for the first user account.

10. The security system of any one of claims 1 to 9, wherein the computing system is adapted to prevent the first user account from accessing the at least one security device when a particular amount of time passes after activation of the security device.

11. The security system of any one of claims 1 to 10, wherein the computing system is adapted to receive a request for creating the second user account from the first user account; and
wherein the computing system is adapted to create the second user account in response to receiving the request for creating the second user account.

12. The security system of any one of claims 1 to 11, wherein the computing system is adapted
to:
receive a subsequent request for activating an expansion to the security system from a subsequent user account associated with a subsequent third-party entity;
modify permissions associated with the subsequent user account in response to receiving the subsequent request;
prompt the second user to assume control of the expansion in response to receiving the request; and
modify subsequent permissions associated with the expansion for the second user account in response to the second user account assuming control of the expansion.

13. The security system of claim 12, wherein responsive to the second user account assuming control of the expansion, the computing system is adapted to create a tertiary user account or modify permissions associated with the tertiary user account, the tertiary user account associated with a tertiary third-party entity.

14. The security system of any one of claims 1 to 13, wherein the at least one security device includes:
at least one surveillance camera adapted to generate video data; and
at least one access control adapted to control access to a door and generate security data associated with a number of times the door was accessed;
wherein to restrict the permissions associated with the security system for the first user account includes denying the first user account access to the video content and the security data.

15. A method for managing a security system, comprising:
associating a first user account for the security system, wherein the security system is associated with a first entity and the first user account is associated with a third-party entity;
generating a second user account for the security system, wherein the second user account is associated with the first entity;
receiving a request to activate the security system from the first user account;
prompting the second user account to assume control of the security system in response to receiving the request to activate the security system;
granting permissions associated with the security system for the second user account in response to the second user account assuming control of the security system; and
restricting permissions associated with the security system for the first user account following the second user account assuming control of the security system.
